# Europäisches Patentamt

# European Patent Office

# Office européen des brevets

(19)

(11) Numéro de publication: **0 061 412**
**B1**

(12)

# FASCICULE DE BREVET EUROPEEN

(45) Date de publication du fascicule du brevet:
**24.07.85**

(51) Int. Cl.⁴: **B 29 C 41/28**, B 29 K 105/02

(21) Numéro de dépôt: **82430006.5**

(22) Date de dépôt: **23.03.82**

(54) **Procédé et dispositif pour fabriquer des bandes de mousse de polymères.**

(30) Priorité: **24.03.81 FR 8106043**

(43) Date de publication de la demande:
**29.09.82 Bulletin 82/39**

(45) Mention de la délivrance du brevet:
**24.07.85 Bulletin 85/30**

(84) Etats contractants désignés:
**AT BE DE GB IT NL**

(56) Documents cités:
**FR - A - 748 468**
**FR - A - 1 302 293**
**FR - A - 1 428 114**
**FR - A - 1 560 106**
**FR - A - 2 027 417**
**FR - A - 2 214 572**
**FR - A - 2 330 525**
**GB - A - 965 185**
**GB - A - 1 260 287**
**US - A - 3 047 449**
**US - A - 3 235 400**

(73) Titulaire: **Poncet, Jean, 4 rue Reine Jeanne,**
**F-13100 Aix-en-Provence (FR)**

(72) Inventeur: **Poncet, Jean, 4 rue Reine Jeanne,**
**F-13100 Aix-en-Provence (FR)**

(74) Mandataire: **Moretti, René et al, C/O Cabinet BEAU DE**
**LOMENIE 14, rue Raphael, F-13008 Marseille (FR)**

ACTORUM AG

## Description

La présente invention a pour objet un procédé et un dispositif pour fabriquer des bandes de mousse de polymères.

Le secteur technique de l'invention est celui des appareillages pour la mise en œuvre de bandes de mousse souple ou rigide.

On sait que dans le processus de moussage polyuréthane, deux réactions simultanées se produisent entre d'une part l'isocyanate et le polyol (ou polyalcool) et d'autre part entre l'isocyanate et l'eau, qui produit le principal agent d'expansion: le gaz carbonique. Cette dernière réaction éventuellement combinée au phénomène physique de l'ébullition d'un agent gonflant auxiliaire (chlorure de méthylène ou trichlorofluométhane) provoque l'expansion de la mousse. On obtient ainsi un matériau poreux thermodurcissable qui peut être, soit souple, soit rigide selon le degré de réticulation du polymère.

Les procédés de coulée en continue actuellement connus consistent, pour la plupart, à répartir aussi uniformément que possible le mélange réactif liquide sur la largeur d'un convoyeur incliné, formé d'un fond et de deux parois latérales qui se déplacent perpendiculairement à la répartition du liquide. Cette répartition d'un mélange de réactants liquides, peu visqueux, et de réactivité rapide, implique une zone de rétention capable de contenir le liquide déversé pendant le temps nécessaire et suffisant à cette opération. Dans cette conception, l'inclinaison du convoyeur est généralement de 4 à 6° sur la longueur nécessaire à l'expansion de la mousse et à sa gélification: entre quinze et vingt mètres. Le déplacement s'effectue ensuite sur un plan horizontal jusqu'à l'équipement de coupe transversal: environ cinquante mètres du point de coulée.

Les dispositifs les plus classiques comportent une tête de coulée animée d'un mouvement transversal de va et vient et la zone de rétention des réactants est formée, en amont par le fond du convoyeur, généralement constitué par une feuille de matériau souple: feuille de papier ou de polyéthylène, latéralement par des parois à défilement continu constituées par le même matériau que celui du fond et en aval, par le produit lui-même qui entre dans sa phase réactive initiale dite «ligne de crème». On précise que l'expression «ligne de crème» désigne l'état du mélange des réactants survenant immédiatement après la phase liquide et dans lequel ce mélange atteint une grande viscosité précédant la formation de la mousse. Le produit à l'état visqueux adhère au support de fond et constitue, constamment renouvelé, un barrage à l'écoulement du mélange liquide le long de la pente du convoyeur. Afin de compenser l'absence de mélange dans cet état, on place, au commencement de la fabrication, un obstacle en aval de la tête de coulée, dont le rôle est de retenir le mélange liquide au démarrage.

Sur ce principe, on connaît un procédé décrit dans le brevet français 1 579 795 selon lequel on place sous le support souple, un élément transversal d'un profil déterminé pour imprimer un mouvement ascendant dudit support sur une très courte distance et ainsi former la paroi aval de la zone de rétention. Ce procédé permet d'améliorer la répartition du mélange liquide sur la largeur du convoyeur et de réduire, voire même supprimer le mouvement de va et vient de la tête de coulée.

Ce principe est également appliqué dans le procédé décrit dans le brevet FR-A 2 137 721 selon lequel on utilise une barre cylindrique protégée par un support souple supérieur, par exemple une bande de papier, qui lamine le mélange liquide au point précis de la ligne de crème, créant ainsi, par un réglage approprié à chaque fabrication et constamment surveillé, un équilibre fragile entre l'arrivée de liquide et son évacuation dans la zone d'expansion. Selon ce procédé, la paroi aval est formée par la barre cylindrique en combinaison avec la ligne de crème qui la suit immédiatement.

Un autre procédé connu est décrit dans le brevet FR-A 2 105 166, lequel consiste à répartir le mélange liquide sur le convoyeur par l'intermédiaire d'un récipient ou auge, dans lequel les réactants sont introduits par le fond et où leur expansion commence à se produire. Les réactants, à l'état de mousse naissante, débordent de ce récipient pour se déverser sur le convoyeur.

Le brevet FR-A 2 330 525 a pour objet des perfectionnements à la machine pour la mise en œuvre du procédé décrit dans le brevet précité et concerne notamment une auge comprenant des dispositifs pour faire varier sa longueur et la largeur de sa goulotte de telle sorte que la largeur de la bande de mousse puisse être changée sans que la production de la bande soit interrompue.

Tous ces procédés et dispositifs connus présentent des inconvénients.

Dans les trois premiers procédés susmentionnés, la paroi amont est toujours formée par le fond du convoyeur qui doit nécessairement être incliné. Le principal inconvénient, découlant de cette conception, est la difficulté de maîtriser l'écoulement parasitaire de la phase liquide des réactants, sous la ligne de crème.

Les inconvénients du dernier procédé selon le brevet FR-A 2 105 166 sont les suivants:

a) la zone de rétention, constituée par un récipient statique est sujette à un encrassement continuel inévitable en raison de la nature évolutive du mélange;

b) la capacité du récipient ne pouvant être modifiée en cours de fabrication, la réactivité du mélange doit par conséquent, être lente sans possibilité de l'adapter aux autres impératifs;

c) le volume de matière, relativement important, contenu dans le récipient et le fait que la réaction commence à s'y déclencher, sont des facteurs d'élévation progressive de la température dans ledit récipient, ce qui modifie l'évolution de la transformation du mélange réactif;

d) les écoulements parasitaires sous la mousse en expansion ne sont pas totalement éliminés en raison de l'utilisation d'un convoyeur incliné.

Tel que cela vient d'être exposé, le mélange, pendant son expansion, passe progressivement de l'état liquide à l'état solide, le produit fini pouvant être rigide ou souple en fonction du degré de réticulation du polymère. L'état rapidement visqueux puis pâteux du mélange provoque contre les parois du conformateur quel qu'il soit: un moule fermé ou ouvert sur le dessus, une retenue qui freine l'expansion des cellules venant au contact des parois.

Dans le cadre de la production de blocs ou de bandes d'une section droite rectangulaire notamment, il résulte de ce phénomène, une forme arrondie de la face supérieure du bloc de mousse à la fin de l'expansion. Cette forme est à l'origine de pertes de matière importantes lors de la fabrication de tels blocs ou bandes.

On a donc cherché à donner à la section des blocs coulés en continu une forme aussi rectangulaire que possible.

Un procédé et un dispositif connus consistent à doubler les parois mobiles latérales avec un film de polyéthylène tiré d'abord suivant un angle déterminé jusqu'au point d'achèvement de l'expansion de la mousse d'où, après formation d'un pli, il accompagne ensuite le bloc de mousse jusqu'à la sortie du convoyeur.

Selon un autre procédé, on comprime la mousse en formation à l'aide de patins lestés en appui sur la face supérieure du bloc, par l'intermédiaire d'une bande de papier ou d'une bande de fibre non tissée, qui accompagne le bloc lors de son déplacement sur le convoyeur.

Un autre procédé décrit dans le brevet français 2 105 166 consiste à placer le point de coulée sensiblement à la même altitude que la face supérieure du bloc à obtenir et on assure l'expansion de la mousse par l'inclinaison contrôlée du convoyeur.

Ces trois procédés présentent des inconvénients.

Les inconvénients du premier procédé résident dans le fait qu'il nécessite l'utilisation de feuilles d'un matériau très souple en vue de sa déformabilité. Un tel matériau, de préférence le polyéthylène, est relativement fragile et actuellement onéreux puisqu'il s'agit d'un dérivé du pétrole.

D'autre part, le pli formé au point final de l'expansion de la mousse laisse dans les faces latérales des bandes, des traces qui obligent à un dressage des flancs, ce qui entraîne des pertes de matière importantes.

Les inconvénients du deuxième procédé sont tout d'abord qu'il nécessite un appareillage complexe et de réglage délicat. De plus, toute variation de la ligne de crème est génératrice d'inclusion d'air entre la bande de papier et la face supérieure du bloc, laquelle présente alors des criques en profondeur, parfois importantes, ce qui entraîne la perte d'une partie de la bande. Egalement selon ce procédé, le papier supérieur ne peut être retiré qu'après gélification totale du bloc, c'est-à-dire vingt-cinq à trente mètres après la coulée et en conséquence les défauts ne sont visibles par les opérateurs qu'à partir de ce moment, ce qui entraîne un retard considérable dans les manœuvres correctives.

L'inconvénient du troisième procédé réside dans la complexité du dispositif de variation de largeur de la bande de mousse en cours de fabrication.

Les plaques de mousse rigide, d'épaisseur contrôlée et dont chaque face est constituée par un matériau de protection: papier, tissu, plaque de plâtre, bois etc... sont généralement fabriquées en continu, en largeur standard de préférence d'un mètre vingt centimètres, au moyen de convoyeurs horizontaux dits à double bande, dont l'un inférieur supporte une bande qui reçoit le mélange réactif et l'autre supérieur comporte une bande qui limite l'expansion du produit et assure outre le calibrage, la planéité de la face supérieure.

Dans ce type de fabrication, il est utile de pouvoir ajuster la distance entre le point de coulée, ou zone de rétention, et l'entrée du mélange en cours d'expansion sous le convoyeur supérieur. De même, il est nécessaire de contrôler la température du support flexible inférieur dans la partie précédant l'entrée du mélange dans le passage existant entre le convoyeur supérieur et le convoyeur inférieur.

Un objectif de l'invention consiste en la mise en œuvre de moyens pour la fabrication de bandes de polymères souples ou rigides et permettant:

– d'obtenir une zone de rétention délimitée avec précision par les éléments mécaniques du dispositif;
– de contrôler, faire varier et ajuster le volume de ladite zone selon les caractéristiques du mélange réactif et du produit à fabriquer;
– d'utiliser à ces fins une combinaison d'éléments ayant entre eux un mouvement relatif continu et dont le sens est déterminé de telle sorte que le mélange en phase liquide soit maintenu dans cette zone, sans fuite appréciable, pour s'écouler ensuite naturellement sur le convoyeur dont l'extrémité amont constitue une paroi de la zone de rétention;
– de régler les altitudes et mouvements respectifs des appareils de telle sorte que l'écoulement du mélange liquide ne soit possible que dans la direction du convoyeur sans qu'il soit nécessaire d'incliner celui-ci.

Un autre objectif de l'invention est de réaliser des bandes de mousse de polymères souples d'une section droite rectangulaire dont la face supérieure est plane.

Ces objectifs sont atteints par le procédé selon l'invention pour la fabrication de bandes continues de mousse de polymères obtenues à partir d'un mélange de réactants liquides produit par une tête mélangeuse, lesquels réactants sont générateurs d'une mousse expansée, selon lequel on introduit en continu ledit mélange de réactants liquides dans un récipient et en ce qu'on laisse ce mélange se dilater de telle sorte qu'une fois totalement expansée, la mousse prise en charge par un convoyeur formant un couloir d'une section droite en U, animé d'un mouvement continu, adopte la forme d'une bande d'une section droite rectangulaire, caractérisé en ce qu'on détermine le volume dudit récipient pour former une zone de rétention du mélange de réactants en phase liquide dans l'état où il sort de la tête mélangeuse et en ce que l'on maintient le niveau de ce mélange à un niveau légèrement supérieur à un plan horizontal sur lequel s'écoule le mélange à l'état liquide, de telle sorte que la phase primaire de la dilatation du mélange et son expansion se produisent à l'extérieur du récipient sur une surface animée d'un mouvement continu sous l'effet du convoyeur, laquelle surface est maintenue dans ledit plan horizontal.

Ces objectifs sont également atteints par le dispositif selon l'invention pour réaliser des bandes de mousse de polymères obtenues à partir d'un mélange de réactants liquides générateurs d'une mousse expansée et comportant un récipient, des moyens pour introduire en continu dans ce récipient ledit mélange de réactants liquides et un convoyeur formant un couloir d'une section droite en U, animé d'un mouvement continu, sur lequel la mousse est déposée pour adopter la forme d'une bande de section droite rectangulaire, dont le récipient comporte une paroi avant, une paroi arrière et deux parois latérales qui jouxtent lesdites parois avant et arrière, lesquelles parois avant et arrière constituent également le fond du récipient, caractérisé en ce que la paroi avant, qui est située du côté du convoyeur, est une paroi courbe constituée par un cylindre animé en rotation autour d'un axe horizontal, dans le même sens et à la même vitesse que le convoyeur, lequel cylindre tangente une surface horizontale sur laquelle s'écoule le mélange de réactants en phase liquide, laquelle surface est animée d'un mouvement continu sous l'effet du convoyeur et que l'ensemble: paroi arrière, parois latérales, comporte des moyens pour obtenir son pivotement autour de l'axe dudit cylindre dans le but d'élever ou d'abaisser ledit ensemble par rapport à ladite surface horizontale afin de modifier le volume du récipient et pour immobiliser ledit ensemble en position après réglage.

Selon un mode de réalisation, la paroi arrière du récipient est une paroi courbe constituée par un cylindre, entraîné en rotation dans le même sens que le cylindre avant, lesquels cylindres sont montés sur deux axes parallèles entre eux et sont sensiblement tangents, la ligne de tangence constituant le fond du récipient et en ce que les parois latérales sont parallèles entre elles et sont au-dessus des cylindres et leur bord inférieur est délimité par deux lignes circulaires concourantes en un point situé au voisinage de ladite ligne de tangence, lesquelles parois latérales entourent partiellement les cylindres afin de permettre d'une part la rotation de cylindres et d'autre part le mouvement relatif de l'ensemble cylindre arrière/parois latérales autour du cylindre avant tout en assurant l'étanchéité du récipient.

Le cylindre arrière est d'un diamètre plus grand que le cylindre avant et est entraîné en rotation à une vitesse plus lente que celle dudit cylindre avant.

Le cylindre arrière est plongé dans un bac à solvant et est soumis à l'action d'une raclette s'étendant dans le sens longitudinal du cylindre pour décoller à sa périphérie les particules polymérisées y adhérant.

Chacune des parois latérales comporte une contre-plaque s'étendant du côté de ladite surface horizontale sur laquelle est déposé le mélange de réactants en phase liquide pour réaliser l'étanchéité à la jonction des parois latérales et de ladite surface, lesquelles contre-plaques sont réglables en position sur les parois.

Lesdites parois latérales comportent des moyens pour les rapprocher l'une vers l'autre ou les éloigner l'une de l'autre et pour les immobiliser en position.

Au moins un desdits cylindres comporte un faisceau de conduits parallèles entre eux et à l'axe de rotation du cylindre, dans lesquels conduits est mis en circulation un fluide caloporteur pour élever ou abaisser la température du cylindre et corrélativement la température du mélange de réactants en phase liquide.

La paroi courbe constituée par ledit cylindre, située à l'avant du récipient du côté du convoyeur et la paroi arrière du récipient, définissent un espace dans lequel est passée une feuille souple, laquelle s'enroule partiellement autour dudit cylindre sur lequel elle se déplace dans le récipient, laquelle feuille poursuit sa course en étant prise en charge par le convoyeur et constitue ladite surface horizontale sur laquelle est déposé le mélange de réactants.

Dans un mode de réalisation, la feuille souple est appliquée contre la partie inférieure dudit cylindre avant, au-dessous du fond du récipient, au moyen d'un rouleau soumis à l'action de moyens élastiques.

Dans un autre mode de réalisation, la feuille souple est appliquée contre la partie inférieure du cylindre arrière, au-dessous de la ligne de tangence des deux cylindres au moyen d'un rouleau soumis à l'action de moyens élastiques, laquelle feuille est ensuite passée entre les deux cylindres et entoure partiellement le cylindre avant par le dessus pour s'étendre tangentiellement à celui-ci dans une position sensiblement horizontale.

Dans le dispositif selon l'invention dont le mélange est introduit en source dans le récipient, une caractéristique est qu'il comporte au moins une tubulure traversant chacune des parois latérales, laquelle tubulure est montée coulissante pour être positionée dans la tête de coulée et comporte sur sa longueur des ouvertures pour assurer la réparation du mélange à l'état liquide dans ladite tête.

Dans un mode particulier de réalisation, la tubulure se compose de plusieurs tubes coaxiaux, disposés dans le prolongement l'un de l'autre et de section dégressive par rapport à la circulation du mélange, de telle sorte à réserver entre eux des espaces annulaires sensiblement de même section, laquelle correspond approximativement à la section du plus petit tube central.

Le dispositif selon l'invention comporte également un plateau sensiblement horizontal, d'une largeur au moins égale à celle du convoyeur et dont la face supérieure est tangente au cylindre avant du récipient, lequel plateau s'étend dudit cylindre avant jusqu'au convoyeur et supporte la feuille sur laquelle se développe la mousse.

Dans ledit dispositif, dans lequel le convoyeur en U se compose d'un tapis porteur de la feuille souple sur laquelle se développe la mousse et dont les parois latérales sont constituées par deux feuilles souples, chacune issue d'un rouleau vertical situé à l'avant du dispositif du côté du récipient, lesquelles feuilles s'étendent sur la longueur du convoyeur et s'enroulent autour d'un rouleau vertical situé à l'arrière du dispositif, lesdites feuilles se déplaçant à la vitesse du tapis en étant accolées du côté de leur bord inférieur le long des bords latéraux de ladite feuille, portée par le convoyeur, une caractéristique consiste dans le fait qu'il comporte en outre parallèlement et à proximité de chacune des faces internes des parois latérales du convoyeur, une autre feuille souple inclinée, laquelle issue d'un rouleau situé du côté dudit récipient, s'étend sur au moins la partie du dispositif où les réactants déposés en phase liquide sur ladite feuille horizontale entrent en réaction et se développent jusqu'à l'expansion totale de la mousse, laquelle feuille se déplace dans cette partie suivant une direction rectiligne de l'entrée vers la sortie du dispositif et de bas en haut pour être prise en charge par un rouleau situé au-dessus du convoyeur, son inclinaison étant telle que ses bords latéraux sont sensiblement parallèles à la pente du mélange en phase de réaction afin d'obtenir des bandes de mousse ayant une face supérieure plane formant avec leurs faces latérales des arêtes vives exemptes de défaut de surface.

Les parties inclinées de ladite feuille sont situées au-dessus du convoyeur et de la tête de coulée et une des parties est inclinée de haut en bas et pliée le long d'un organe rectiligne parallèle et jouxtant la feuille horizontale et l'autre partie est renvoyée de bas en haut suivant la même inclinaison que celle de ladite première partie.

Dans sa conception pour la mise en œuvre de panneaux en mousse rigide, le dispositif selon l'invention, comportant un convoyeur inférieur, porteur d'une feuille souple sur laquelle est déposé le mélange de réactants et un deuxième convoyeur disposé au-dessus dudit convoyeur inférieur et parallèle à celui-ci et sur lequel est appliquée une feuille souple sur le brin inférieur du tapis supérieur, lesquels convoyeurs définissent un espace qui détermine l'épaisseur des panneaux de mousse rigide, se caractérise en ce que le récipient dans lequel sont introduits les réactants liquides est déplaçable dans le sens longitudinal du dispositif et comporte des moyens pour être immobilisé en position par rapport aux convoyeurs.

Dans ce mode de réalisation, le plateau, qui s'étend entre le récipient et le convoyeur inférieur, se compose d'au moins deux plaques de faible épaisseur, parallèles entre elles et adjacentes, lesquelles plaques sont télescopiques pour ajuster la longueur du plateau afin de relier le récipient et le convoyeur.

Ce dispositif comporte, dans l'espace existant entre le convoyeur inférieur et le convoyeur supérieur, des barreaux parallèles entre eux et disposés dans un même plan, lesquels barreaux sont en porte à faux et sont fixés à la structure du dispositif du côté dudit récipient et s'étendent vers les convoyeurs, de telle sorte que leur extrémité libre, qui se trouve entre lesdits convoyeurs, se situe sensiblement au lieu où se produit la solidification de la mousse.

Chacun de ces barreaux est enveloppé par une gaine légèrement plus grande que le barreau pour pouvoir être déplacée le long de celui-ci sous l'effet de la mousse pendant son expansion afin de réaliser en continu et délimiter des canaux dans les panneaux de mousse.

Les avantages de l'invention se situent à divers niveaux:

– elle est simple de conception et facile à adapter sur tous les types de machines de moussage;
– elle peut être utilisée aussi bien pour la fabrication de la mousse souple que pour la fabrication de la mousse rigide;
– elle offre la possibilité de faire varier la laize en continu;
– également la possibilité de faire varier en continu le volume du liquide en rétention avant le démarrage de la réaction de moussage ou, selon le besoin, la possibilité de conserver ce volume constant tout en changeant de laize: il n'est donc pas nécessaire de faire un ajustement de catalyse;
– elle permet de réguler facilement la température des différents constituants de l'appareil, ces températures pouvant elles-mêmes être différentes;
– elle est basée sur un procédé sain: pas de pistolage, de projection et de formation excessive de vapeurs au point de coulée;
– elle permet de contrôler la teneur en air du mélange réactif;
– elle permet d'obtenir une couche de mousse uniforme et régulière sur toute la laize (avantage important pour les plaques de faible épaisseur ou les blocs en continu à section rectangulaire);
– par suite de l'élimination du problème de la ligne de crème, elle permet des formulations plus simples et également d'utiliser de nouvelles matières premières;
– elle offre la possibilité plus particulièrement pour la mousse rigide d'isolation, d'obtenir des produits composites avec parements rigides: plaques de plâtre, panneaux de bois aggloméré, contre-plaqué, feuilles de métal etc . . . sans avoir à utiliser le procédé dit «inverse», qui a le gros inconvénient d'entraîner de lourdes pertes latérales de matière;

– elle offre la possibilité de laminer sur des supports souples: tissus, papier, films etc...;

– par rapport au dispositif à goulotte fixe et à l'exception des flancs mobiles, de surface réduite, il n'y a aucune zone sans mouvement où la mousse peut se figer et nécessiter un décrochage manuel. Le risque «d'icebergs» est supprimé. Le problème de la propreté de la goulotte, qui est très important pour un écoulement régulier, ne se pose plus avec le dispositif mettant en œuvre le procédé selon l'invention;

– l'invention permet en outre une maîtrise plus grande de la vitesse de défilement du convoyeur de coulée. Cette vitesse pouvant être notablement réduite; la longueur des installations peut être diminuée en conséquence, d'où une réduction importante des coûts d'investissements.

Au niveau de la production des réactants générateurs de mousse et quel que soit le mode de conception du récipient selon l'invention, la paroi amont de la zone de rétention, formée soit par le cylindre arrière, soit par la paroi du bac, est toujours à une altitude supérieure à celle du cylindre avant. La paroi aval est constituée, à sa partie inférieure, par le support flexible de fond épousant la forme du cylindre avant et à sa partie supérieure par la ligne de crème avec cette particularité que le volume retenu de liquide réactif, donc de la nappe d'écoulement qui détermine la hauteur du bloc, peut être maîtrisé dans une large mesure, environ dans une proportion de 1 à 2.

La position sensiblement horizontale du convoyeur n'entraîne plus d'écoulement parasite de la phase liquide sous la phase en expansion, inconvénient déjà signalé sur les convoyeurs inclinés et qui oblige à une vitesse minimale. Dans le procédé proposé, la vitesse peut être réduite autant que le permet la réactivité du mélange, d'où une réduction proportionnelle de la longueur des installations.

L'invention offre la possibilité de réguler la température des cylindres ou du bac. Etant rappelé que la réaction de moussage est génératrice de chaleur, il est important de pouvoir maintenir le mélange et l'appareillage à une température constante. On utilisera de préférence un fluide caloporteur traversant les cylindres et capable d'évacuer les calories produites ou, au contraire d'en apporter si nécessaire.

L'expérience ayant montré qu'une température élevée (50 à 60°C) du fond flexible limitait la surdensification de la base de la mousse (2 à 3% d'économie sur la matière) et que, par contre une température basse entre 17 et 20°C retardait la distillation des agents gonflants auxiliaires (monofluotrichlorométhylène) on voit immédiatement l'intérêt de refroidir le cylindre arrière et de réchauffer le cylindre avant.

En cours de fabrication, il est possible de faire varier la largeur du bloc de mousse par déplacement des flancs mobiles et, en même temps si besoin, de changer la position du cylindre arrière ou du bac pour conserver dans la zone de rétention le même volume de liquide ou au contraire le modifier.

L'arrivée du liquide réactif peut être réalisée soit par ruissellement sur une goulotte, soit en source par deux canalisations latérales traversant les flancs mobiles et constituées chacune par une série d'ajutages concentriques de sections décroissantes de l'amont vers l'aval, de manière à ce que les ajutages aient tous une même section ou des sections voisines pour éviter route turbulence dans le mélange liquide et assurer la répartition du mélange dans le récipient.

Il est possible d'intégrer au produit une charge pulvérulente ou granulée, sèche ou imprégnée, répandue sur le cylindre arrière à l'aide par exemple, d'une trémie et d'un distributeur approprié. L'addition des charges dans la mousse de polyuréthane, qui s'est toujours heurtée aux difficultés de les acheminer dans le mélange, se trouve résolue par ce procédé. Cette caractéristique est surtout intéressante pour la fabrication de panneaux d'isolation en mousse rigide entre deux parements.

L'appareillage tel qu'il est décrit ci-dessus peut facilement être adapté aux convoyeurs existants, notamment pour la fabrication de mousse souple, sans perdre l'avantage de la formation de la ligne de crème sur un plan horizontal.

Cette adaptation peut être étendue aux machines de production de mousse rigide, dites machines «double bande», en conservant la faculté généralement offerte par ces machines, de régler la distance entre la tête de coulée, ici la zone de rétention, et l'entrée du convoyeur double bande.

Le procédé et le dispositif selon l'invention permettent encore d'obtenir des bandes de mousse souple d'une section droite rectangulaire ne présentant aucune détérioration des flancs et ayant une face supérieure plane.

– L'angle de montée peut être réglé à la vue et sans retard;

– la face supérieure de la bande n'est pas obstruée pendant le dégazage qui marque la fin de l'expansion;

– la bande se forme en expansion libre sur toute sa largeur;

– la matière en cours d'élaboration est sous le contrôle visuel permanent des opérateurs.

Le procédé et le dispositif selon l'invention permettent enfin la fabrication de plaques de mousse rigide. L'adoption d'une tête de coulée à cylindres alimentée en source, permet de placer un dispositif capable de créer des canaux longitudinaux dans l'épaisseur du panneau en formation et réaliser ainsi une importante économie de matière première.

– D'autres avantages ressortiront encore de la description suivante de divers modes préférentiels de réalisation du dispositif selon l'invention en référence au dessin annexé sur lequel:

– la figure 1 est une vue en élévation très schématique d'un dispositif selon l'invention pour fabriquer des bandes de mousse de polymères souples et comportant une tête de coulée à cylindres,

– la figure 2 est une vue en coupe du dispositif de la figure 1 suivant la ligne II II,

– la figure 3 est une vue en coupe schématique partielle à plus grande échelle de la partie avant du dispositif de la figure 1, illustrant la tête de coulée dans un mode d'exécution et dans sa disposition où la zone de rétention est maximale,

– la figure 4 est une vue schématique de la tête de coulée de la figure 3 dans sa disposition où la zone de rétention est minimale,

– la figure 5 est une demi-vue de dessus schématique de la tête de coulée de la figure 3,

– la figure 6 est une vue en élévation partielle de la partie mécanique du récipient composant la tête de coulée,

– la figure 7 est une vue de dessus partielle du mécanisme de la figure 6,

– la figure 8 est une vue en coupe schématique d'une tête de coulée dans un autre mode de réalisation et comportant un seul cylindre. Sur cette figure, le récipient est réglé pour que sa contenance soit maximale;

– la figure 9 est une vue en coupe schématique de la tête de coulée de la figure 8, dont le récipient est réglé pour que sa contenance soit minimale,

– la figure 10 est une vue en coupe longitudinale schématique d'un dispositif selon l'invention pour la fabrication de panneaux de mousse de polymère rigide,

– la figure 11 est une vue en coupe longitudinale schématique de la partie avant du dispositif de la figure 10, comportant des aménagements pour obtenir des panneaux rigides comportant des canaux longitudinaux,

– la figure 12 est une vue de dessus d'un des noyaux formateurs desdits canaux et de ses accessoires et qui illustre la mise en œuvre des gaines des canaux des panneaux rigides selon un mode de réalisation,

– la figure 13 est une vue en perspective partielle d'un panneau de mousse rigide selon l'invention,

– la figure 14 est une vue en coupe longitudinale d'un des conduits d'alimentation en source du mélange de réactants dans les récipients à cylindre selon l'invention,

– la figure 15 est une vue suivant F1 du conduit de la figure 14.

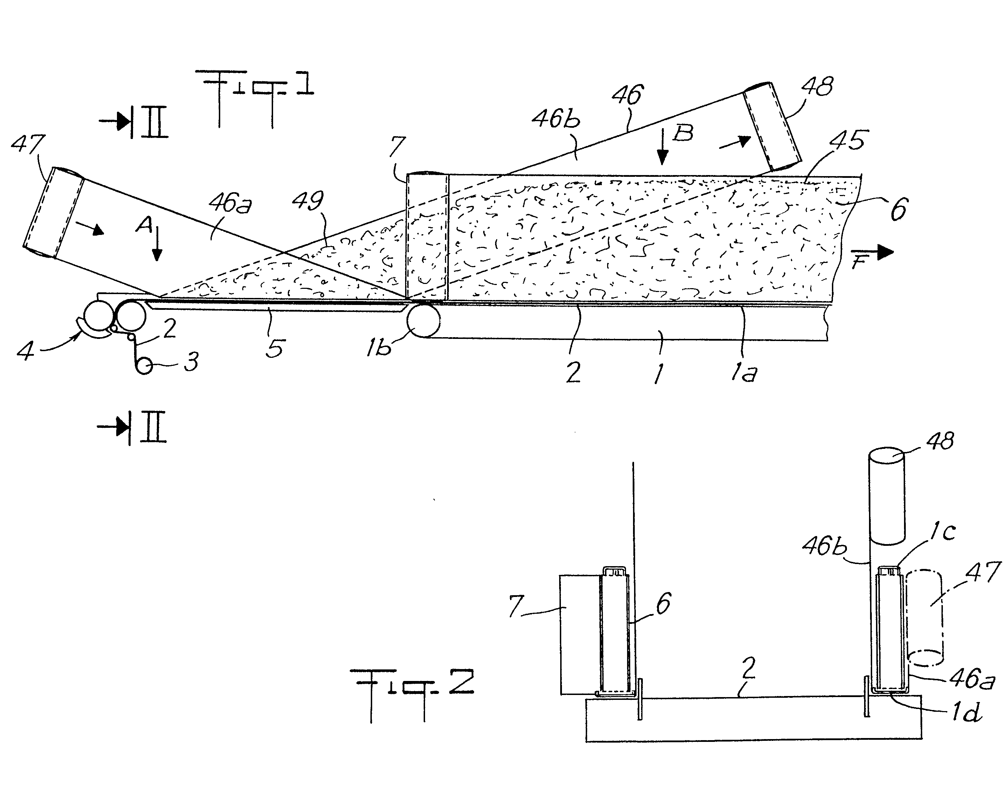

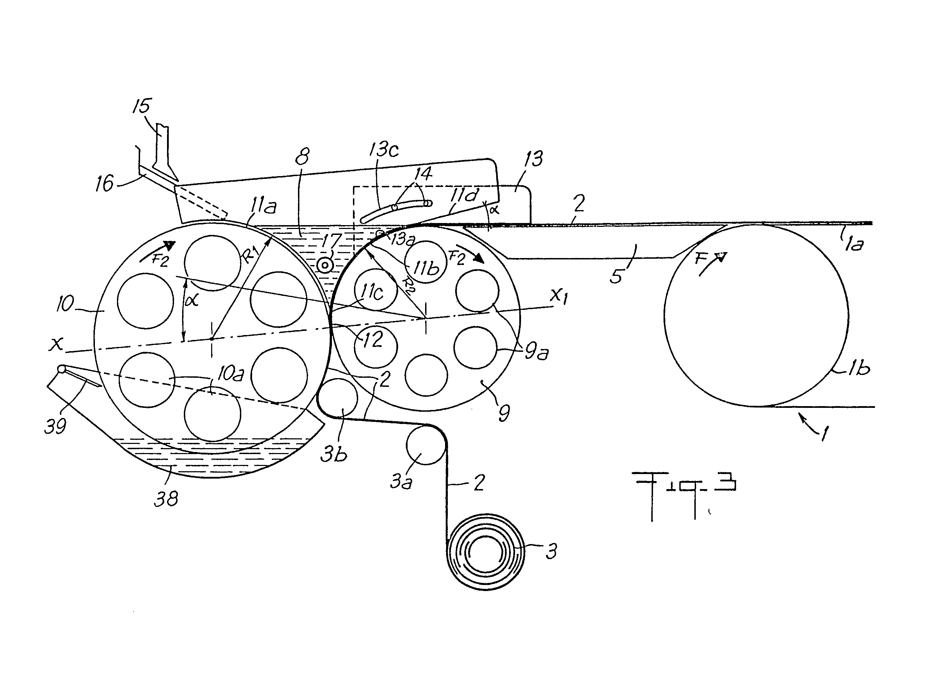

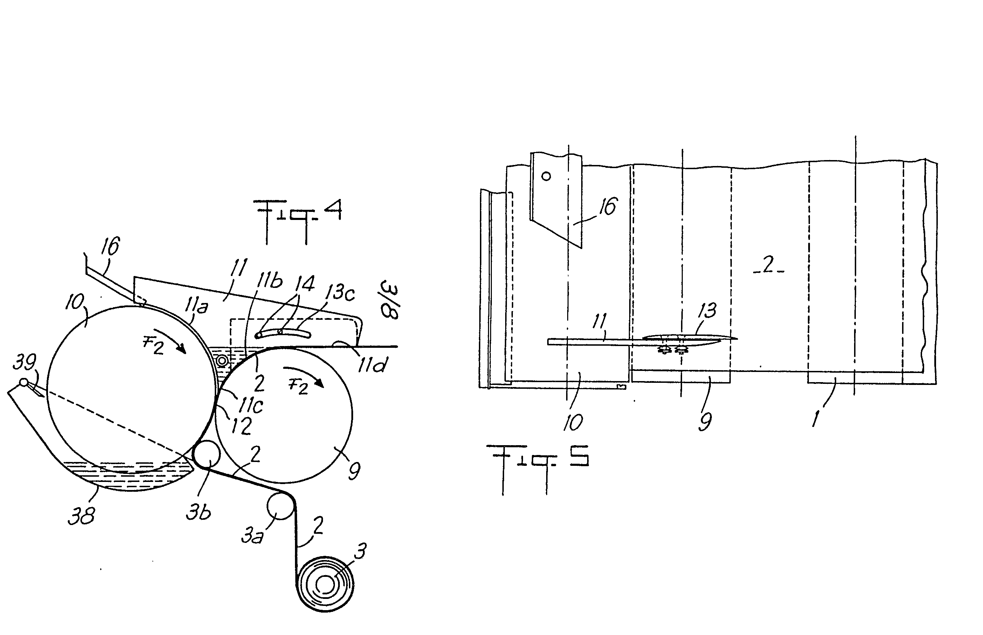

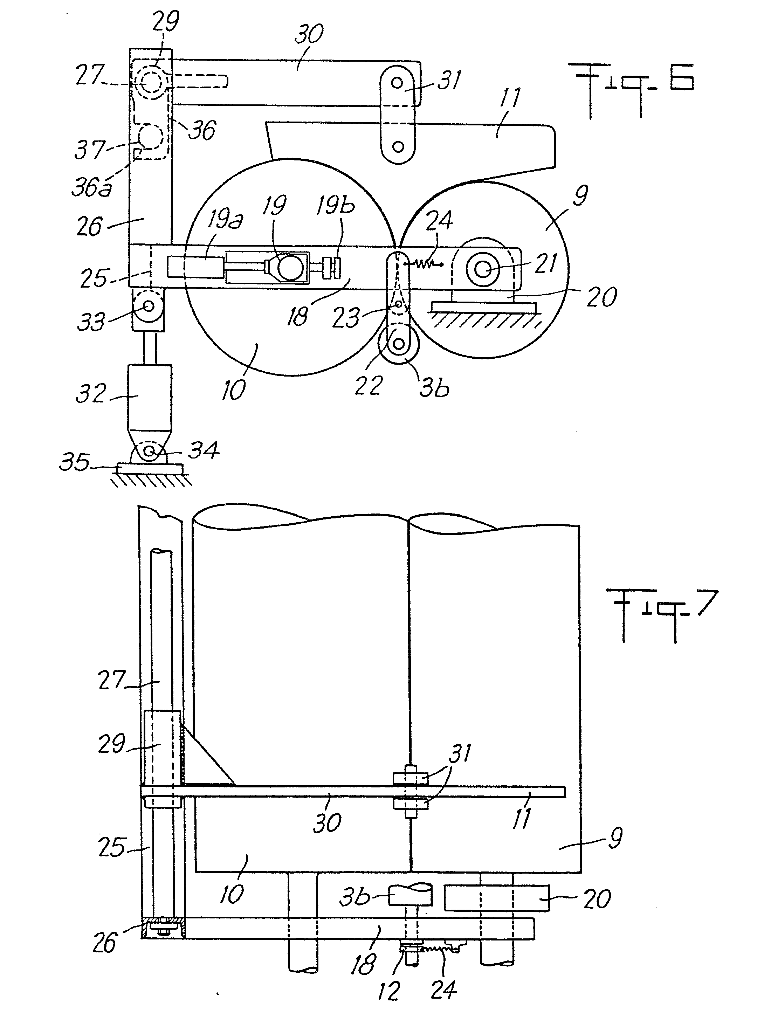

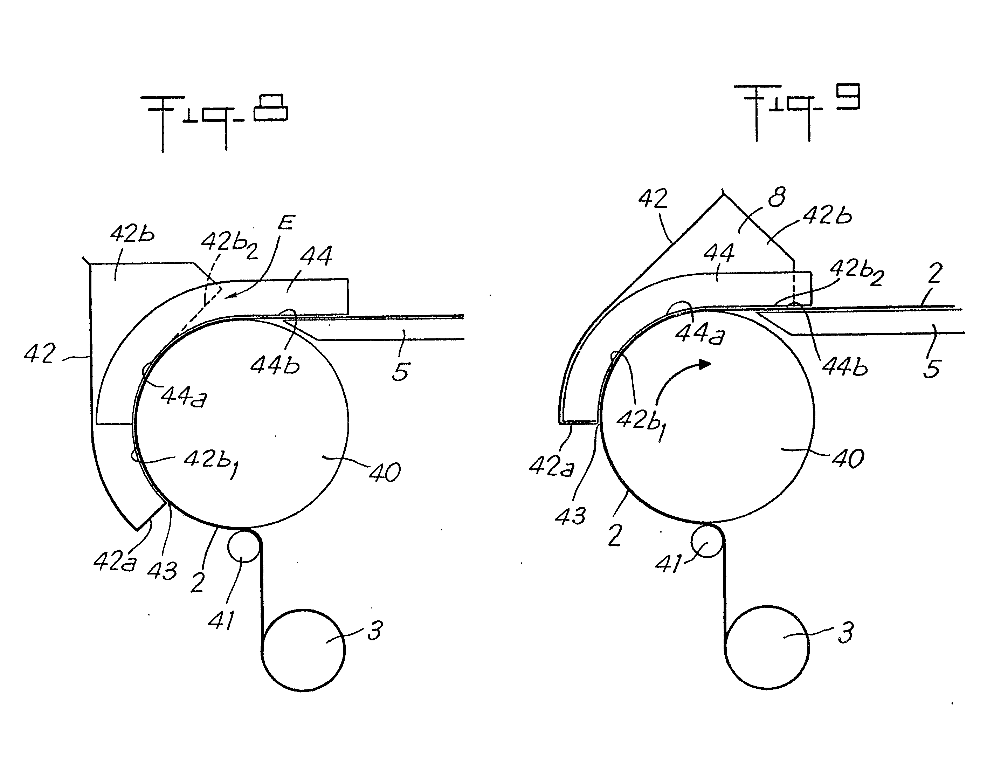

On se reporte d'abord aux figures 1 à 7 du dessin qui illustrent l'invention dans un mode de réalisation pour l'obtention de bandes de mousse de polymère souple.

Le dispositif de la figure 1 se compose d'un convoyeur 1, s'étendant dans un plan sensiblement horizontal dont le brin porteur 1a supporte une feuille souple 2, issue d'un rouleau 3. Cette feuille 2, par exemple en papier est d'abord passée dans une tête de coulée 4 et est supportée, tout en pouvant glisser, sur un plateau intermédiaire 5, disposé entre la tête 4 et le convoyeur 1.

Le plateau 5 et le brin porteur 1a du convoyeur 1 sont sensiblement dans le même plan. Les parois latérales du convoyeur 1 sont formées d'une manière connue par des feuilles souples 6, issues de deux rouleaux 7. Les rouleaux 7 sont disposés perpendiculairement au convoyeur 1 et les feuilles 6 sont adjacentes aux bords latéraux de la feuille horizontale 2. L'ensemble des feuilles 2/6, formant un couloir d'une section droite en U, se déplace à la vitesse du convoyeur 1 dans le sens de la flèche F. Tel que le représente le dessin, les rouleaux 7 sont par exemple situés au niveau du tambour avant 1b du convoyeur 1. On reviendra plus loin sur cette figure pour compléter sa description concernant d'autres aménagements concernant l'invention.

Dans un mode d'exécution, la tête de coulée 4 est représentée aux figures 3 à 7 du dessin.

On appelle tête de coulée le dispositif dans lequel les réactants en phase liquide sont introduits en vue de leur mélange et assurant la fonction de distributeur de ce mélange liquide avant que ne se produise son expansion jusqu'à la phase finale où il prend la consistance d'une mousse.

Selon l'invention le procédé consiste à déterminer le volume d'un récipient pour former une zone de rétention du mélange de réactants en phase liquide et on maintient le niveau de ce mélange à un niveau légèrement supérieur au plan dans lequel se déplace la feuille 2, de telle sorte que la phase primaire de la dilatation du mélange et son expansion se produisent à l'extérieur du récipient, sur ladite feuille 2, laquelle est déplacée dans le sens de la flèche F pour amener le mélange en réaction au contact des parois du convoyeur 1/2/6 qui donnent à la bande de mousse sa forme définitive, celle-ci étant par exemple d'une section droite rectangulaire.

Les figures 3 à 7 représentent un mode préférentiel de réalisation de la tête de coulée, laquelle se compose d'un récipient 8 composé par deux cylindres de même longueur 9/10 et de deux parois latérales 11. Les cylindres 9/10 sont de diamètres différents, de telle sorte que le cylindre 9 est plus petit que le cylindre 10. Ces cylindres sont parallèles entre eux et sont disposés horizontalement et transversalement au convoyeur 1. Le cylindre 9 est situé à proximité du plateau 5 et est très proche de l'autre cylindre 10 de manière à laisser entre eux un léger espace pour le passage d'un film, par exemple une feuille de papier 2. Dans cette position, les cylindres sont sensiblement tangents et la ligne de tangence repérée 12 constitue la partie extrême inférieure du récipient. Celui-ci comporte deux parois avant/arrière courbes animées, lesquelles sont constituées par lesdits cylindres 9/10 ainsi que des parois latérales 11 qui sont disposées au-dessus des cylindres, sont parallèles entre elles et s'étendent perpendiculairement aux génératrices desdits cylindres 9/10. Leur bord inférieur est formé de deux lignes courbes 11a/11b concourantes au point 11c, lequel se situe au voisinage de la ligne de tangence repérée 12. La ligne 11a est une ligne

circulaire d'un rayon $R_1$ ayant pour centre l'axe de rotation du cylindre 10. Cette ligne circulaire 11a contourne étroitement la périphérie du cylindre 10. La ligne 11b est une ligne circulaire de rayon $R_2$, ayant pour centre l'axe de rotation du cylindre 9. La ligne circulaire 11b contourne la périphérie du cylindre 9 et est en appui sur la feuille de papier 2. La ligne courbe 11b se prolonge par une ligne droite 11d s'étendant au-dessus du plateau 5. La partie supérieure du cylindre 9 est sensiblement tangente au plan dans lequel se trouve le plateau 5 et dans lequel se déplace la feuille souple 2.

Celle-ci provient d'un rouleau 3 situé au-dessous de la tête de coulée, lequel rouleau est parallèle aux cylindres 9/10.

La feuille 2 est d'abord en appui sur un premier rouleau 3a, monté à rotation libre sur la structure de la machine et est appliqué contre le cylindre 10 par un rouleau 3b. La feuille 2, issue du rouleau de papier 3 contourne d'abord partiellement le cylindre 10, passe dans l'espace 12, contourne la partie supérieure du cylindre 9 pour continuer sa course horizontalement sur le plateau 5 et le brin porteur 1a du convoyeur 1.

L'ensemble cylindres 9/10 et parois latérales 11 est monté pivotant autour de l'axe du cylindre 9, de telle sorte que le volume de la zone de rétention du mélange 8 peut varier en fonction de la position angulaire dudit ensemble. Le débattement angulaire $\alpha$ est par exemple de 15°. A la position illustrée sur la figure 3, le cylindre 10, étant à sa position extrême inférieure, le volume de la zone de rétention 8 est maximum. Sur la figure 4, le cylindre 10 est à sa position extrême supérieure et le volume de ladite zone 8 est minimum.

Comme on peut le voir sur la figure 3, l'angle formé entre la ligne 11d desdites parois latérales 11 et le plan dans lequel se déplace la feuille 2 est l'angle $\alpha$ de débattement du récipient par exemple 15°C. Afin de réaliser l'étanchéité du récipient entre les parois latérales 11 et la feuille de papier 2, chaque paroi 11 comporte, du côté du plateau 5, une contre-plaque 13 destinée à masquer le vide existant entre la ligne 11d et la feuille 2. Cette contre-plaque 13 comporte, à sa partie inférieure, un bord circulaire 13a prolongé par une ligne droite 13b. Le bord inférieur de la plaque 13 suit ainsi le contour de la partie supérieure du cylindre 9 et se prolonge sur une partie du plateau 5. Les contre-plaques 13 comportent encore une lumière courbe 13c pour permettre leur positionnement sur les parois latérales 11 et leur fixation est assurée par exemple au moyen de deux boulons 14 ou par tous autres moyens équivalents.

Les cylindres 9/10 sont entraînés en rotation dans le sens des flèches F2 qui est également le sens du convoyeur 1. Le cylindre 9 est entraîné à la vitesse du convoyeur 1. Le cylindre 10 tourne à une vitesse plus lente.

L'admission du mélange liquide dans le récipient 8 peut être réalisée de deux façons: soit au moyen d'une tête de distribution 15 qui déverse le mélange liquide sur une goulotte de répartition 16, située au-dessus du cylindre 10, soit au moyen de deux tubulures horizontales 17 introduisant le liquide en source à travers les parois latérales du récipient. Chacune de ces tubulures traverse une des parois latérales 11 et amène le mélange de réactants sans turbulence dans le récipient.

Un mode de réalisation d'une telle tubulure 17 est illustré aux figures 14/15 du dessin. Elle se compose de plusieurs tubes coaxiaux 17a/17b/17c/17d mis dans le prolongement l'un de l'autre de telle sorte que l'extrémité de la tubulure 17e puisse atteindre la zone centrale de la tête de coulée quelle que soit la position des parois latérales 11 par rapport à l'axe médian de la tête. Cette tubulure est donc montée réglable dans la paroi 11 qu'elle traverse et l'étanchéité, au droit du passage dans celle-ci, est obtenue par exemple au moyen d'un joint à lèvre 17f permettant son coulissement. Chacun des tubes 17b/17c/17d réserve en combinaison avec celui dans lequel il est engagé et qu'il prolonge 17a/17b/17c, un espace annulaire 17g/17h/17k sensiblement de même section, laquelle correspondant approximativement à la section du plus petit tube 17d. Le positionnement des tubes entre eux est obtenu au moyen d'entretoises 17l, réparties autour des tubes. Le mélange à l'état liquide est ainsi réparti dans la tête de coulée selon un même débit et sans turbulence par les espaces annulaires 17g/17h/17k ainsi que par le tube central 17d.

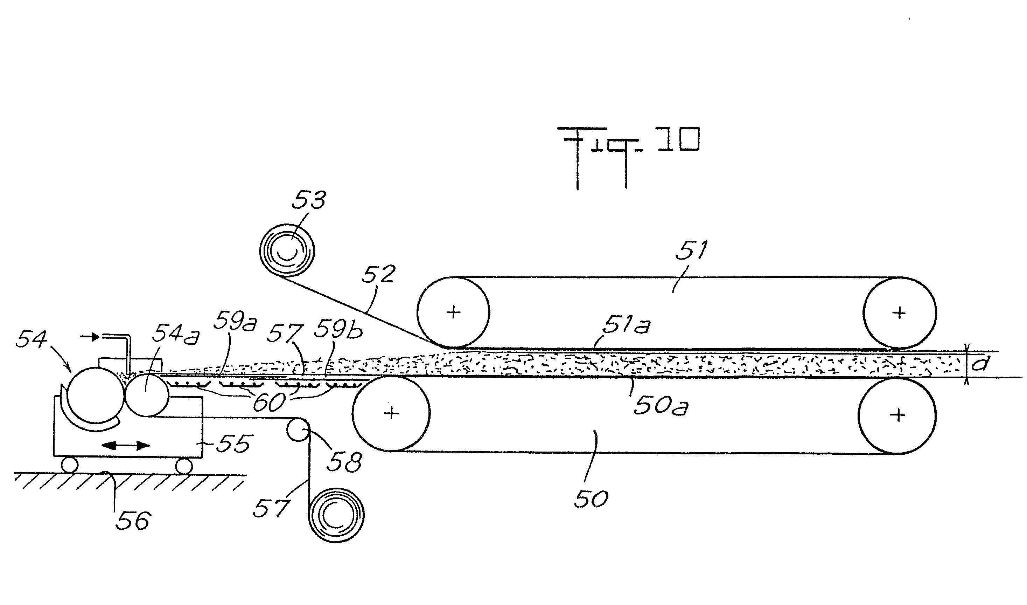

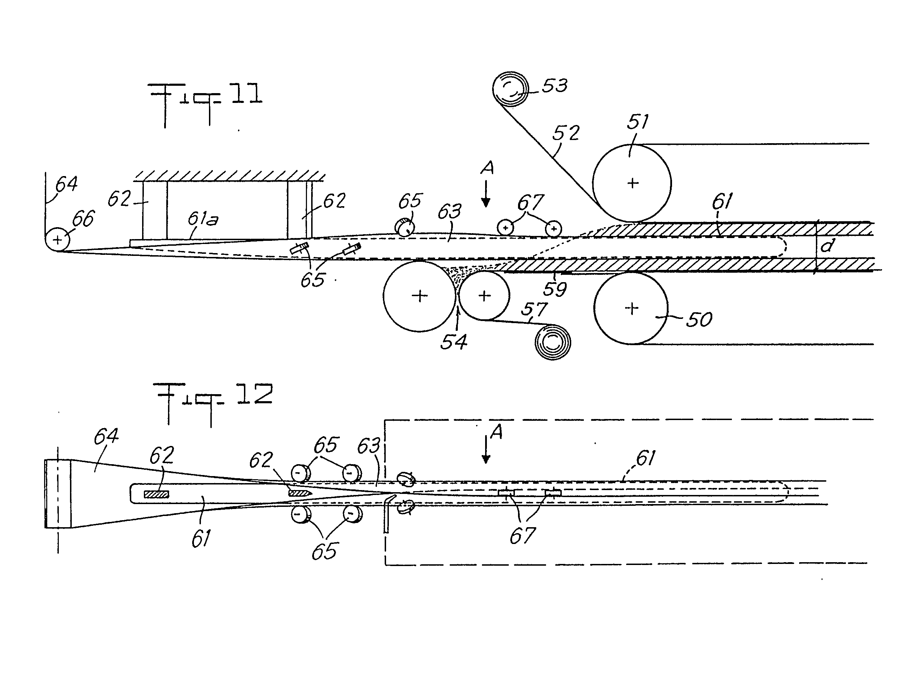

Un mode de réalisation de la structure porteuse des cylindres 9/10 et des parois latérales 11 est donné en référence aux figures 6 et 7.

Les cylindres 9/10 sont entraînés en rotation en étant montés sur deux bras 18 parallèles entre eux et disposés de part et d'autre des cylindres. Le grand cylindre 10 est monté réglable sur les supports 18 dans des paliers 19 montés sur glissières et comportant des moyens de réglage 19a et de butée 19b pour permettre de l'éloigner ou de le rapprocher du cylindre 9, et pour l'immobiliser en position.

Le cylindre 9 est monté à position fixe à une des extrémités des bras 18. L'ensemble est porté par des paliers 20 fixés au châssis de la machine. Dans cette conception les bras 18 et l'ensemble des éléments qu'ils portent peuvent pivoter autour de l'axe du cylindre 9, repéré 21. Le rouleau 3b, destiné à plaquer la feuille de papier contre le cylindre 10, est porté par deux biellettes 22, articulées par leur milieu autour d'un axe 23 porté par une patte s'étendant à la partie inférieure des bras. Les biellettes 22 sont soumises à la tension d'un ressort 24, accroché aux bras 18, de telle sorte que le rouleau 3b est pivoté du côté du cylindre 10.

Les bras 18 sont reliés entre eux par une traverse 25 et comportent deux prolongements 26 s'étendant perpendiculairement de bas en haut. Ces deux prolongements 26 sont parallèles entre eux et portent à leur partie supérieure une tige filetée 27, dont le filetage est inversé droite/gauche à partir de son milieu. Cette tige 27 est reliée par une de ses extrémités à des moyens pour l'entraîner en rotation.

Elle coopère avec deux manchons 29, lesquels portent chacun un bras 30 s'étendant perpendiculairement aux prolongements 26. Ces bras 30 sont parallèles aux bras 18 et portent, à leur extrémité libre, des bielles 31 à raison de deux biellettes par bras, lesquelles biellettes forment des chapes. Ces biellettes 31 sont articulées aux bras 30 et également aux parois latérales 11 qui composent le récipient. Les parois 11 ainsi guidées se placent automatiquement au-dessus et autour des cylindres 9/10, de sorte qu'elles réalisent en combinaison avec lesdits cylindres un volume de rétention d'une étanchéité acceptable.

Le débattement angulaire de l'ensemble est obtenu au moyen d'un ou plusieurs vérins à double effet 32 à fonctionnement de préférence hydraulique, articulés d'une part en 33 à l'extrémité de la structure mobile 18/25/26 et d'autre part en 34 sur une chape 35 fixée au châssis de l'appareillage.

Le choix du volume de la zone de rétention 8 est obtenu en modifiant l'angle $\alpha$ de la ligne $XX_1$ sur laquelle sont les cylindres 9/10 et/ou en modifiant la longueur du récipient par déplacement des parois latérales 11, en agissant sur la vis 27. Les parois 11, guidées en translation par les supports 30, peuvent être rapprochées l'une vers l'autre ou éloignées l'une de l'autre symétriquement à l'axe longitudinal du dispositif. Le bras 30 est maintenu parallèlement au bras 18 au moyen d'une butée coulissante 36 échancrée en 36a qui lui est solidaire et qui coopère avec une glissière 37 s'étendant transversalement à la tête de coulée et qui est parallèle à la vis 27. Cette butée 36 s'étend perpendiculairement au bras 30 et au-dessous de celui-ci chaque bras 30 comporte une butée.

Le réglage de l'écartement des parois latérales 11 détermine la largeur de la bande de mousse obtenue. Le mélange de réactants liquides contenu dans la zone de rétention 8 et dont le niveau supérieur se situe sensiblement dans le plan du plateau 5 ou légèrement au-dessus, est entraîné à l'état liquide par la feuille souple 2, de telle sorte que la dilatation et l'expansion de la mousse se produisent à l'extérieur du récipient sur le plateau 5, l'expansion totale se poursuivant sur le convoyeur 1.

Dans le but de conserver le récipient dans un bon état de propreté, le cylindre 10, qui constitue la paroi arrière du récipient, est plongé partiellement dans un bac à solvant 38, disposé à la partie inférieure de la tête de coulée. Ce bac 38 comporte une raclette 39 s'étendant transversalement au cylindre et maintenue en position suivant un angle convenable pour détacher de la paroi du cylindre les particules de matière polymérisées qui auraient pu y adhérer. Comme on peut le voir sur le dessin, le bac 38 se déplace avec l'ensemble lors du réglage du volume de la zone de rétention 8 et sa forme est telle qu'aucun déversement de solvant ne peut se produire.

Les cylindres 9/10 comportent encore des conduits 9a/10a équidistants de l'axe de rotation des cylindres et s'étendant longitudinalement, parallèlement audit axe de rotation. Les cylindres comportent à leurs extrémités des joints tournants pour assurer l'étanchéité à ces endroits. Ces conduits 9a/10a ont pour fonction de canaliser un fluide caloporteur, par exemple de l'eau, dans le but de réchauffer ou refroidir les cylindres et corrélativement le mélange de réactants. Cette conception est intéressante du fait que, la réaction de moussage étant génératice de chaleur, il est important de maintenir le mélange et l'appareillage à une température constante. Elle permet notamment de contrôler la température à divers points du récipient. Par exemple, le cylindre arrière 10 peut être refroidi alors que le cylindre 9 peut être réchauffé. L'expérience a en effet montré qu'une température de 50 à 60°C du fond flexible constitué par la feuille souple 2, limitait la surdensification de la base de la mousse. Par contre, une basse température entre 17 et 20°C retardait la distillation des agents gonflants auxiliaires d'où l'intérêt de refroidir le cylindre arrière 10 et de réchauffer le cylindre avant 9.

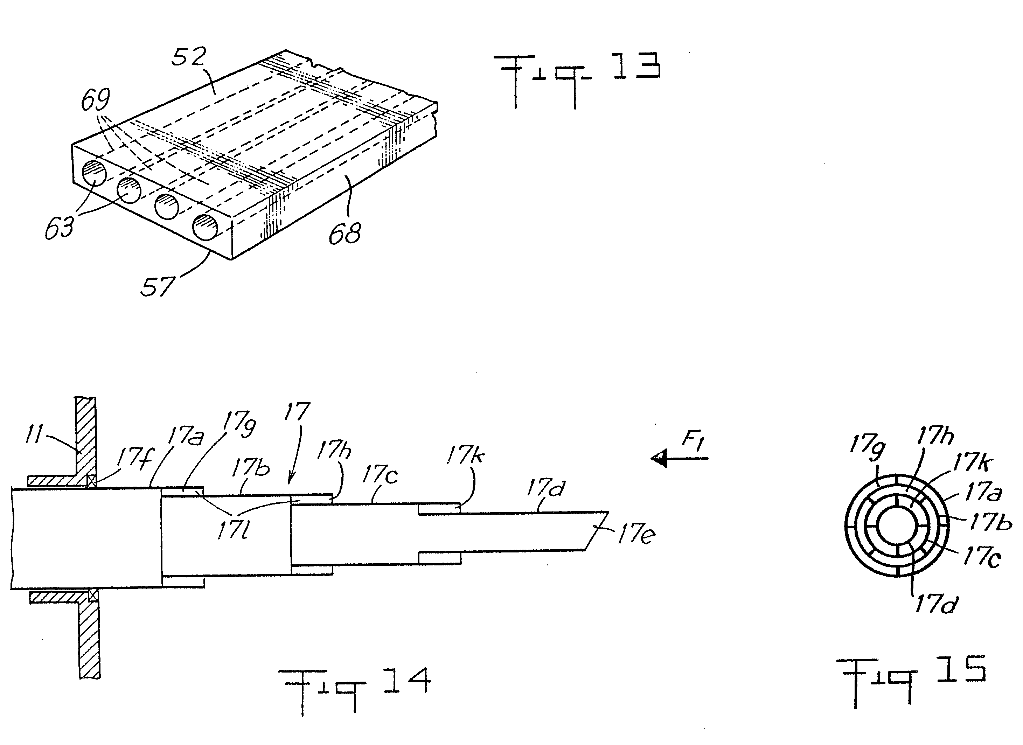

Un autre mode de réalisation d'une tête de coulée selon l'invention est illustré aux figures 8 et 9 du dessin.

Celle-ci se compose d'un cylindre 40 entraîné en rotation dans le sens du déplacement de la bande transporteuse du convoyeur 1 et sur lequel cylindre 40 est appliquée une feuille de papier 2 provenant d'une bobine 3. L'enroulement partiel de la feuille 2 sur le cylindre 40 est obtenu au moyen d'un rouleau 41 s'étendant parallèlement au-dit cylindre. Comme dans le dispositif précédemment décrit, la feuille souple 2 est supportée par un plateau horizontal 5 et est prise en charge par un convoyeur également horizontal.

Le cylindre 40, recouvert de la feuille souple 2, constitue la paroi avant du récipient dans lequel le mélange de réactants liquides est introduit. Les parois arrière et de fond du récipient et les parois latérales constituent un ensemble pouvant pivoter autour du cylindre 40 en restant étroitement appliqué par les parois latérales sur la feuille souple 2. Quelle que soit la position angulaire du récipient, sa partie supérieure est toujours à un niveau supérieur au plan du plateau 5 dans lequel se déplace la feuille 2. Outre la paroi mobile constituée par le cylindre 40, le récipient se compose d'une paroi arrière 42, laquelle suit en partie le contour du cylindre 40 et comporte à sa partie inférieure un «retour» 42a, dirigé du côté dudit cylindre. Un espace 43 est réservé entre les parties 42a et le cylindre, pour permettre le passage de la feuille souple 2. Les parois latérales 42b du récipient sont délimitées du côté du cylindre par une ligne circulaire $42b_1$, laquelle est prolongée à la partie supérieure du récipient par une ligne droite $42b_2$. Dans la position illustrée à la figure 9, cette ligne droite $42b_2$ est appliquée contre la feuille souple 2, ce qui assure l'étanchéité du récipient à cet endroit où le mélange, à l'état liquide, commence son expansion.

Afin d'assurer l'étanchéité du récipient, quelle que soit la position angulaire de sa partie constituée par les parois 42/42a/42b, le dispositif comporte, à l'intérieur du récipient et contre les faces internes des parois latérales 42b, des contre-plaques 44 qui ont pour fonction de masquer le vide existant entre les parois latérales 42b et la feuille souple 2, tel que cela est illustré notamment à la figure 8 du dessin. Les contre-plaques 44 ont une position fixe par rapport au cylindre 40 et comportent des moyens pour être réglées et fixées à une position déterminée par rapport aux parois latérales 42b du récipient. Elles comportent un bord circulaire 44a prolongé par une partie droite 44b, de telle sorte à coopérer étroitement avec la feuille souple 2. Elles adoptent la forme d'une bande recourbée à bords latéraux parallèles dont la largeur est supérieure à l'espace maximum E laissé au droit des parois latérales 42b du récipient.

Comme la tête de coulée décrite en référence aux figures 3 à 7, le dispositif décrit aux figures 8 et 9 peut comporter une alimentation en source dans les parois latérales 42b du récipient ou au moyen d'une tête de distribution située au-dessus du récipient. Egalement les parois latérales 42b peuvent être rapprochées ou éloignées l'une de l'autre afin de déterminer la largeur de la bande de mousse à obtenir.

La température du mélange de réactants liquides contenu dans le récipient peut être contrôlée par admission dans le cylindre d'un liquide caloporteur circulant dans des conduits longitudinaux comme cela a été décrit en référence à la figure 3. Comme dans le dispositif précédent comportant une tête de coulée à deux cylindres, la tête de coulée, représentée aux figures 8 et 9, permet de laisser s'écouler le mélange de réactants à l'état liquide, à l'extérieur du récipient, au droit du plateau 5, l'extension de la mousse se faisant sur le plateau 5 pour se terminer sur le convoyeur 1.

On se reporte de nouveau à la figure 1 du dessin sur laquelle on a illustré schématiquement l'évolution du mélange de réactants s'écoulant en phase liquide au poste A et qui, entrant en réaction, se développe progressivement suivant une pente régulière pour adopter au point B la structure définitive d'une bande de mousse.

Afin que la face supérieure 45 de la bande de mousse ainsi formée soit plane et que les angles supérieurs de la bande soient sensiblement des angles droits, il est nécessaire d'accompagner la mousse pendant son évolution entre les points A et B pour éviter que l'état d'abord visqueux puis pâteux du mélange ne provoque contre les parois du conformateur une retenue qui freine l'expansion des cellules en contact avec les parois. Le problème a été résolu selon l'invention en disposant à l'intérieur du convoyeur et contre chacune des parois latérales de celui-ci, constituées par des feuilles de papier 6, une feuille souple 46 également en papier, laquelle est déroulée dans une direction oblique tel que l'illustre la figure 1.

La feuille de papier 46, issue d'un rouleau 47 situé en avant et au-dessus de la tête de coulée à cylindres 4 s'étend dans un plan vertical d'abord dans une direction inclinée de haut en bas jusqu'à la feuille 2 portée par le plateau 5. La feuille 46 est alors pliée autour d'un organe 1c constitué par une paroi de forte épaisseur, dont le bord inférieur 1d est rectiligne et s'étend parallèlement en jouxtant ladite feuille 2, de telle sorte que les parties 46a et 46b se déplacent dans des plans parallèles. La partie 46b est ainsi inclinée de bas en haut et s'enroule autour d'une bobine 48 située au-dessus du conformateur des bandes de mousse, lequel est constitué par la feuille horizontale 2 et par les deux feuilles 6 délimitant les parois latérales du convoyeur. L'inclinaison de la partie 46b est sensiblement celle de la matière 49 en cours de développement. Celle-ci est prise en charge au poste A et est accompagnée jusqu'à la fin de l'expansion au point B. La partie 46a de la feuille 46 se trouve, par rapport au couloir en U du convoyeur, derrière la partie 46b qui est au contact de la mousse. Celle-ci continue sa course à l'état de bande en étant guidée par les feuilles latérales 6 jusqu'à complète gélification.

On se reporte maintenant à la figure 10 du dessin qui illustre un dispositif selon l'invention pour fabriquer des panneaux de mousse rigide. Celui-ci se compose d'un convoyeur horizontal à tapis 50 s'étendant dans un plan horizontal au-dessus duquel est disposé un deuxième convoyeur 51. Les deux convoyeurs 50/51 sont parallèles entre eux et sont espacés l'un de l'autre d'une distance d qui correspond à l'épaisseur de la plaque à obtenir.

Le brin inférieur 51a du convoyeur 51 est recouvert d'une feuille, par exemple de papier 52 provenant d'une bobine 53 située en avant et au-dessus du dispositif.

La tête de coulée à cylindre 54, qui est du type de celle décrite en référence aux figures 3 à 7, est montée sur un chariot 55 guidé par des rails 56. Le brin porteur 50a du convoyeur inférieur 50 est recouvert par une feuille de papier 57, laquelle provenant d'une bobine débitrice est mise en appui sur un rouleau 58 et est passée dans la tête de coulée 54 en entourant partiellement le cylindre avant 54a de cette dernière. La distance séparant la tête de coulée 54 du convoyeur inférieur 50 est comblée par un plateau 59 constitué de deux parties 59a/59b téléscopiques. Chacune de ces parties est constituée par une mince plaque métallique de préférence en cuivre ou en aluminium, lesquelles sont adjacentes et superposées de manière à pouvoir coulisser l'une par rapport à l'autre en fonction de la position de la tête de coulée 54 par rapport aux convoyeurs. La longueur de la plaque 59 peut ainsi être modifiée dans une proportion voisine de 1 à 2 afin de déterminer une zone d'expansion du mélange et de contrôler son expansion, le réchauffage étant assuré par une batterie d'émetteurs à infrarouges 60 à position réglable et dont la répartition est déterminée par la longueur de zone choisie.

L'adoption d'une tête de coulée à cylindres selon l'invention, alimentée en source, qui supprime l'arrivée du mélange réactif par la partie supérieure du dispositif, a permis de concevoir un dispositif capable de créer des canaux longitudinaux dans l'épaisseur des panneaux en formation et de réaliser une importante économie de matière première.

Un dispositif d'une telle conception est illustré aux figures 11 et 12 du dessin.

Au-dessus de la tête de coulée 54 et de la zone d'expansion 59, sont disposés parallèlement au sens de déplacement des convoyeurs 50/51, des barreaux 61, de préférence cylindriques. Ces barreaux sont d'une section inférieure à l'épaisseur des panneaux et s'étendent horizontalement au milieu de l'espace dexistant entre les convoyeurs 50/51. Le dispositif comporte plusieurs barreaux 61 parallèles entre eux, lesquels sont situés dans un même plan. Les barreaux 61 sont fixés à la structure de la machine à des supports 62, situés à une de leurs extrémités et s'étendant en porte à faux au-dessus de la tête de coulée 54 et entre lesdits convoyeurs 50/51 de telle sorte que leur extrémité libre se situe sensiblement au point où la mousse prend sa consistance. Lesdits barreaux constituent les noyaux autour desquels viennent se former des gaines 63, obtenues à partir de bandes de papier 64 ou de film de polyéthylène par exemple, repliées en continu au moyen de galets formeurs coniques 65 selon un principe connu.

En amont de chaque barreau 61, est disposé un rouleau 66 sur lequel la feuille 64 est en appui par le dessous. Le rouleau 66 est disposé de telle sorte que la feuille vienne tangenter le barreau 61 à sa partie inférieure. Celui-ci est d'une section amoindrie et profilée à sa partie 61a pour accompagner la feuille 64 avant qu'elle soit mise au contact des galets formeurs 65. Ceux-ci sont disposés de telle sorte à mettre un des bords de la feuille en recouvrement sur l'autre, tel qu'illustré à la figure 12. La gaine ainsi constituée au niveau du poste A est fermée par collage ou par soudure au moyen de deux mollettes 67 qui appliquent les bords l'un sur l'autre. Les gaines sont entraînées à la même vitesse que les convoyeurs 50/51 initialement au moyen d'une pince d'amarrage et ensuite par la matière elle-même par adhérance de celle-ci aux gaines. La mousse en formation se développe autour des gaines 63 entre les convoyeurs 50/51 jusqu'à expansion totale.

Le panneau obtenu à la sortie des convoyeurs comporte des canaux longitudinaux parallèles entre eux et délimités par lesdites gaines. Un panneau ainsi obtenu est illustré à la figure 13 du dessin. La couche de mousse 68 calibrée en épaisseur entre les deux convoyeurs 50/51 est protégée sur les grandes faces du panneau par des feuilles de papier 52/57. Les canaux 69 formés par les noyaux 61 adoptent la forme de ces derniers et s'étendent dans le sens longitudinal du panneau.

A la figure 13, l'exemple représenté comporte des canaux 69 d'une section droite circulaire dont la paroi périphérique est délimitée et protégée par les gaines 63 qui adhèrent à la mousse. On précise que les gaines 63 peuvent également être constituées par des tubes rigides en carton ou en matière plastique.

Pour obtenir des panneaux comportant de telles gaines rigides, celles-ci sont acheminées successivement autour des noyaux 61. Les gaines sont fendues le long d'une génératrice et sont acheminées successivement pour être engagées à l'extrémité 61a des noyaux 61 et sont ensuite, comme décrit ci-dessus, entraînées par adhérance du produit en formation véhiculé par le convoyeur.

**Revendications**

1. Procédé de fabrication de bandes continues de mousse de polymères obtenues à partir d'un mélange de réactants liquides produit par une tête mélangeuse, lesquels réactants sont générateurs d'une mousse expansée, selon lequel on introduit en continu ledit mélange de réactants liquides dans un récipient et en ce qu'on laisse ce mélange se dilater de telle sorte qu'une fois totalement expansée, la mousse prise en charge par un convoyeur formant un couloir d'une section droite en U, animé d'un mouvement continu, adopte la forme d'une bande d'une section droite rectangulaire, caractérisé en ce qu'on détermine le volume dudit récipient pour former un zone de rétention du mélange de réactants en phase liquide dans l'état où il sort de la tête mélangeuse et en ce que l'on maintient le niveau de ce mélange à un niveau légèrement supérieur à un plan horizontal sur lequel s'écoule le mélange à l'état liquide, de telle sorte que la phase primaire de la dilatation du mélange et son expansion se produisent à l'extérieur du récipient sur une surface animée d'un mouvement continu sous l'effet du convoyeur, laquelle surface est maintenue dans ledit plan horizontal.

2. Dispositif pour réaliser des bandes de mousse de polymères obtenues à partir d'un mélange de réactants liquides générateurs d'une mousse expansée et comportant un récipient (8/42), des moyens (15/17) pour introduire en continu dans ce récipient ledit mélange de réactants liquides et un convoyeur formant un couloir d'une section droite en U (1/2/6), animé d'un mouvement continu, sur lequel la mousse est déposée pour adopter la forme d'une bande de section droite rectangulaire, dont le récipient comporte une paroi avant (9/40), une paroi arrière (10/42) et deux parois latérales (11/42b), qui jouxtent lesdites parois avant et arrière, lesquelles parois avant (9/40) et arrière (10/42) constituent également le fond du récipient, caractérisé en ce que la paroi avant, qui est située du côté du convoyeur (1/2/6), est une paroi courbe constituée par un cylindre (9/40) animé en rotation autour d'un axe horizontal, dans le même sens et à la même vitesse que le convoyeur, lequel cylindre (9/40) tangente une surface horizontale (2), sur laquelle s'écoule le mélange de réactants en phase liquide, laquelle surface (2) est animée d'un mouvement continu sous l'effet du convoyeur (1/2/6) et que l'ensemble: paroi arrière (10/42), parois latérales (11/42b) comporte des moyens pour obtenir son pivotement autour de l'axe dudit cylindre (9/40) dans le but d'élever ou d'abaisser ladit ensemble (10/42–11/42b) par rapport à ladite surface horizontale (2) afin de modifier le volume du récipient et pour immobiliser ledit ensemble en position après réglage.

3. Dispositif selon la revendication 2, dont le bord supérieur de la paroi arrière (10/42) et des parois latérales (11/42b) du récipient se situent à un niveau supérieur à celui de la paroi avant (9/40), caractérisé en ce que ladite paroi avant (9/40) tangente une surface horizontale (2) sur laquelle s'écoule le mélange de réactants en phase liquide, laquelle surface horizontale (2) est animée d'un mouvement continu sous l'effet du convoyeur (1/2/6).

4. Dispositif selon l'une quelconque des revendications 2 et 3, caractérisé en ce que l'ensemble: paroi arrière (10/42), parois latérales (11/42b) comporte des moyens pour obtenir son pivotement autour de l'axe dudit cylindre (9/40) dans le but d'élever ou d'abaisser ledit ensemble (10/42/11/42b) par rapport à ladite surface horizontale (2) afin de modifier le volume du récipient, et pour immobiliser en position ledit ensemble après réglage.

5. Dispositif selon l'une quelconque des revendications 2 à 4, caractérisé en ce que la paroi arrière du récipient (8) est une paroi courbe constituée par un cylindre (10) entraîné en rotation dans le même sens que le cylindre avant (9), lesquels cylindres (9/10) sont montés sur deux axes parallèles entre eux et sont sensiblement tangents, la ligne de tangence (12) constituant le fond du récipient (8) et en ce que les parois latérales (11) sont parallèles entre elles et sont au-dessus des cylindres (9/10) et leur bord inférieur est délimité par deux lignes circulaires (11a/11b) concourantes en un point (11c) situé au voisinage de ladite ligne de tangence (12), lesquelles parois latérales entourent partiellement les cylindres (9/10) afin de permettre d'une part la rotation des cylindres et d'autre part le mouvement relatif de l'ensemble cylindre arrière (10)/parois latérales (11) autour du cylindre avant (9) tout en assurant l'étanchéité du récipient (8).

6. Dispositif selon la revendication 5, caractérisé en ce que le cylindre arrière (10) est d'un diamètre plus grand que le cylindre avant (9) et est entraîné en rotation à une vitesse plus lente que celle dudit cylindre (9).

7. Dispositif selon l'une quelconque des revendications 5 et 6, caractérisé en ce que le cylindre arrière (10) est plongé dans un bac à solvant (38) et est soumis à l'action d'une raclette (39) s'étendant dans le sens longitudinal du cylindre (10) pour décoller à sa périphérie les particules polymérisées y adhérant.

8. Dispositif selon l'une quelconque des revendications 2 à 7, caractérisé en ce que chacune des parois latérales (11/42b) comporte une contreplaque (13/44) s'étendant du côté de ladite surface horizontale (2) sur laquelle est déposé le mélange de réactants en phase liquide pour réaliser l'étanchéité à la jonction des parois latérales (11/42b) et de ladite surface (2), lesquelles contre-plaques (13/44) sont réglables en position sur les parois (11/42b).

9. Dispositif selon l'une quelconque des revendications 2 à 8, caractérisé en ce qu'au moins un desdits cylindres (9/10) comporte un faisceau de conduits (9a/10a) parallèles entre eux et à l'axe de rotation du cylindre, dans lesquels conduits (9a/10a) est mis en circulation un fluide caloporteur pour élever ou abaisser la température du cylindre (9/10) et corrélativement la température du mélange de réactants en phase liquide.

10. Dispositif selon l'une quelconque des revendications 2 à 9, caractérisé en ce que la paroi courbe, constituée par ledit cylindre (9/40) située à l'avant du récipient du côté du convoyeur (1, 2, 6) et la paroi arrière (10/42) du récipient, définissent un espace (12/43) dans lequel est passée une feuille souple (2), laquelle s'enroule partiellement autour dudit cylindre (9/40) sur lequel elle se déplace dans le récipient, laquelle feuille (2) poursuit sa course en étant prise en charge par le convoyeur (1, 2, 6) et constitue ladite surface horizontale (2) sur laquelle est déposé le mélange de réactants.

11. Dispositif selon la revendication 10, caractérisé en ce que la feuille souple (2) est appliquée contre la partie inférieure dudit cylindre (40) au-dessous du fond du récipient au moyen d'un rouleau (41) soumis à l'action de moyens élastiques.

12. Dispositif selon l'une quelconque des revendications 2 à 10, caractérisé en ce que la feuille souple (2) est appliquée contre la partie inférieure du cylindre arrière (10) au-dessous de la ligne de tangence (12) des deux cylindres (9/10) au moyen d'un rouleau (3b) soumis à l'action de moyens élastiques, laquelle feuille est ensuite passée entre les deux cylindres (9/10) et entoure partiellement le cylindre avant (9) par le dessus pour s'étendre tangentiellement à celui-ci dans une position sensiblement horizontale.

13. Dispositif selon l'une quelconque des revendications 2 à 12, dont le mélange est introduit en source dans le récipient (8), caractérisé en ce qu'il comporte au moins une tubulure (17) traversant chacune des parois (11/42b), laquelle tubulure est montée coulissante pour être positionnée dans la tête de coulée (4) et comporte sur sa longueur des ouvertures pour assurer la répartition du mélange à l'état liquide dans la tête de coulée.

14. Dispositif selon la revendication 13, caractérisé en ce que la tubulure (17) se compose de plusieurs tubes coaxiaux (17a/17b/17c/17d) disposés dans le prolongement l'un de l'autre et de section dégressive par rapport à la circulation du mélange, de telle sorte à réserver entre eux des espaces annulaires (17g/17h/17k) sensiblement de même section, laquelle correspond approximativement à la section du plus petit tube central (17d).

15. Dispositif selon l'une quelconque des revendications 2 à 14, dans lequel le convoyeur en U se compose d'un tapis (1a) porteur de la feuille souple (2), sur laquelle se développe la mousse et dont les parois latérales (6) sont constituées par deux feuilles souples, chacune issue d'un rouleau vertical (7) situé à l'avant du dispositif du côté du récipient (4), lesquelles feuilles (6) s'étendent sur la longueur du convoyeur (1) et s'enroulent autour d'un autre rouleau vertical situé à l'arrière du dispositif, lesquelles feuilles (6) se déplaçant à la vitesse du tapis (1a) en étant accolées du côté de leur bord inférieur le long des bords latéraux de ladite feuille (2), portée par le convoyeur, caractérisé en ce qu'il comporte en outre parallèlement et à proximité de chacune des faces internes des parois latérales (6) du convoyeur (1), une autre feuille souple inclinée (46) laquelle issue d'un rouleau (47) situé du côté dudit récipient (4) s'étend sur au moins la partie du dispositif où les réactants déposées en phase liquide sur ladite feuille horizontale (2) entrent en réaction et se développent jusqu'à l'expansion totale de la mousse, laquelle feuille se déplace dans cette partie (46b) suivant une direction rectiligne de l'entrée vers la sortie du dispositif et de bas en haut pour être prise en charge par le rouleau (48) situé au-dessus du convoyeur (1), son inclinaison étant telle que ses bords latéraux sont sensiblement parallèles à la pente (49) du mélange en phase de réaction afin d'obtenir des bandes de mousse ayant une face supérieure plane formant avec leurs faces latérales des arêtes vives exemptes de défaut de surface.

16. Dispositif selon la revendication 15, caractérisé en ce que les parties (46a/46b) de la feuille (46) sont situées au-dessus du convoyeur (1) et de la tête de coulée (4) et en ce que la partie (46a) est inclinée de haut en bas et est pliée le long d'un organe rectiligne parallèle et jouxtant la feuille horizontale (2) et la partie (46b) est renvoyée de bas en haut suivant la même inclinaison que celle de la partie (46a).

17. Dispositif selon l'une quelconque des revendications 2 à 14 pour la fabrication de panneaux de mousse rigide et comportant un convoyeur inférieur (50) porteur d'une feuille souple (57) sur laquelle est déposé le mélange de réactants et un deuxième convoyeur (51) disposé au-dessus dudit convoyeur inférieur (50) et parallèle à celui-ci et sur lequel est appliqué une feuille souple (52) sur le brin inférieur du tapis supérieur (51a), lesquels convoyeurs (50/51) définissent un espace d qui détermine l'épaisseur des panneaux de mousse rigide, caractérisé en ce que le récipient (54) dans lequel sont introduits les réactants liquides est déplaçable dans le sens longitudinal du dispositif et comporte des moyens pour être immobilisé en position par rapport au convoyeur (50).

18. Dispositif selon la revendication 17, caractérisé en ce que le plateau (59) qui s'étend entre le récipient (54) et le convoyeur inférieur (50) se compose d'au moins deux plaques (59a/59b) de faible épaisseur, parallèles entre elles et adjacentes, lesquelles plaques sont télescopiques pour ajuster la longueur du plateau (59) afin de relier le récipient (54) et le convoyeur (50).

19. Dispositif selon l'une quelconque des revendications 2 à 14 et 17 et 18, caractérisé en ce qu'il comporte, dans l'espace existant entre le convoyeur inférieur (50) et le convoyeur supérieur (51), des barreaux (61) parallèles entre eux et disposés dans un même plan, lesquels barreaux (61) sont en porte à faux et sont fixés à la structure du dispositif du côté dudit récipient (54) et s'étendent vers les convoyeurs (50/51) de telle sorte que leur extrémité libre qui se trouve entre lesdits convoyeurs (50/51) se situe sensiblement au lieu où se produit la solidification de la mousse.

20. Dispositif selon la revendication 19, caractérisé en ce que chacun des barreaux (61) est enveloppé par une gaine (63) légèrement plus grande que le barreau, pour pouvoir être déplacée le long de celui-ci sous l'effet de la mousse pendant son expansion, afin de réaliser en continu et délimiter des canaux (69) dans les panneaux de mousse (68).

**Patentansprüche**

1. Verfahren zur Herstellung von Endlosbändern aus Polymerschaum, welche aus einer durch einen Mischkopf erzeugten Mischung von flüssigen Reaktionspartnern erhalten werden, welche Reaktionspartner Erzeuger eines expandierten Schaums sind, bei welchem Verfahren die Mischung der flüssigen Reaktionspartner kontinuierlich in einen Behälter eingebracht und derart ausdehnen gelassen wird, dass der Schaum – sobald er vollkommen expandiert ist –, der von einem einen Gang mit U-förmigem Querschnitt bildenden und in kontinuierliche Bewegung versetzten Förderer übernommen wird, die Form eines Bandes mit rechteckigem Querschnitt annimmt, dadurch gekennzeichnet, dass das Volumen des Behälters zur Bildung einer Rückhaltezone für die Mischung der Reaktionspartner so bestimmt wird, dass sie sich bei Verlassen des Mischkopfes in flüssiger Phase befindet, und dass das Niveau dieser Mischung derart auf einem Niveau etwas über einer horizontalen Ebene, auf der die Mischung in flüssigem Zustand fliesst, gehalten wird, dass die Primärphase der Ausdehnung der Mischung und ihre Expansion ausserhalb des Behälters auf einer unter der Wirkung eines Förderers in kontinuierliche Bewegung versetzten Oberfläche, die in der genannten horizontalen Ebene gehalten ist, stattfinden.

2. Vorrichtung zur Herstellung von Endlosbändern aus Polymerschaum, welche aus einer Mischung von flüssigen, einen expandierten Schaum erzeugenden Reaktionspartnern erhalten werden, mit einem Behälter (8/42), Mitteln (15/17) zum kontinuierlichen Einbringen der Mischung der flüssigen Reaktionspartner in den Behälter und einem einen Gang mit U-förmigem Querschnitt bildenden Förderer (1/2/6), der in kontinuierliche Bewegung versetzt ist und auf welchem der Schaum zur Annahme der Form eines Bandes mit rechteckigem Querschnitt abgelegt ist, wobei der Behälter eine Vorderwand (9/40), eine Rückwand (10/42) und zwei an die Vorder- bzw. Rückwand anstossende Seitenwände (11/42b) umfasst, wobei die Vorder- (9/40) bzw. Rückwand (10/42) auch den Boden des Behälters bilden, dadurch gekennzeichnet, dass die auf der Seite des Förderers (1/2/6) befindliche Vorderwand eine gekrümmte, aus einem um eine horizontale Achse in gleicher Richtung und mit derselben Geschwindigkeit wie der Förderer rotationsbetriebenen Zylinder (9/40) bestehende Wand ist, welcher Zylinder (9/40) eine horizontale Fläche (2) tangiert, auf der die Mischung der Reaktionspartner in flüssiger Phase fliesst und die unter der Wirkung des Förderers (1/2/6) kontinuierlich in Bewegung versetzt ist, und dass die Gesamtheit aus Rückwand (10/42/ und Seitenwänden (11/42b) Mittel zum Schwenken derselben um die Zylinderachse (9/40) zwecks Hebens oder Senkens der Gesamtheit (10/42–11/42b) gegenüber der horizontalen Fläche (2) zum Verändern des Volumens des Behälters und Mittel zum Fixieren der Gesamtheit in der eingestellten Position umfasst.

3. Vorrichtung nach Anspruch 2, bei welcher sich der obere Rand der Rückwand (10/42) und der Seitenwände (11/42b) des Behälters in einer Höhe über jener der Vorderwand (9/40) befinden, dadurch gekennzeichnet, dass die Vorderwand (9/40) eine horizontale Fläche (2) tangiert, auf der die Mischung der Reaktionspartner in flüssiger Phase fliesst und die unter der Wirkung des Förderers (1/2/6) kontinuierlich in Bewegung versetzt ist.

4. Vorrichtung nach einem der Ansprüche 2 und 3, dadurch gekennzeichnet, dass die Gesamtheit aus Rückwand (10/42) und Seitenwänden (11/42b) Mittel zum Schwenken derselben um die Zylinderachse (9/40) zwecks Hebens oder Senkens der Gesamtheit (10/42/11/42b) gegenüber der horizontalen Fläche (2) zum Verändern des Volumens des Behälters und Mittel zum Fixieren der Gesamtheit in der eingestellten Position umfasst.

5. Vorrichtung nach einem der Ansprüche 2 bis 4, dadurch gekennzeichnet, dass die Rückwand des Behälters (8) eine gekrümmte, aus einem in dieselbe Richtung wie der vordere Zylinder (9) rotationsbetriebenen Zylinder (10) bestehende Wand ist, welche Zylinder (9/10) auf zwei zueinander parallelen Achsen gelagert und im wesentlichen einander berühren, wobei die Berührungslinie (12) den Boden des Behälters (8) bildet, und dass die Seitenwände (11) zueinander parallel sind und sich über den Zylindern (9/10) befinden und ihr unterer Rand durch zwei in einem nahe der Berührungslinie (12) befindlichen Punkt (11c) zusammenlaufende Kreislinien (11a/11b) begrenzt ist, wobei die Seitenwände zur Ermöglichung der Rotation der Zylinder einerseits und der Relativbewegung der Gesamtheit aus hinterem Zylinder (10)/Seitenwänden (11) um den vorderen Zylinder (9) unter Garantie der Dichtheit des Behälters (8) anderseits die Zylinder (9/10) teilweise umgeben.

6. Vorrichtung nach Anspruch 5, dadurch gekennzeichnet, dass der hintere Zylinder (10) einen grösseren Durchmesser als der vordere Zylinder (9) aufweist und mit einer langsameren Geschwindigkeit als der Zylinder (9) angetrieben ist.

7. Vorrichtung nach einem der Ansprüche 5 und 6, dadurch gekennzeichnet, dass der hintere Zylinder (10) in einem Lösungsmitteltrog (38) eingetaucht und der Wirkung eines sich in Längsrichtung des Zylinders (10) zum Abstreifen der an seinem Umfang haftenden polymerisierten Teilchen von demselben erstreckenden Schabers (39) unterworfen ist.

8. Vorrichtung nach einem der Ansprüche 2 bis 7, dadurch gekennzeichnet, dass jede der Seitenwände (11/42b) eine sich auf der Seite der horizontalen Fläche (2), auf der sich die Mischung der Reaktionspartner in flüssiger Phase befindet, erstreckende Gegenplatte (13/44) zum Herstellen der Dichtheit an der Verbindungsstelle der Seitenwände (11/42b) und der Fläche (2) umfasst, welche Gegenplatten (13/44) in der Position an den Wänden (11/42b) einstellbar sind.

9. Vorrichtung nach einem der Ansprüche 2 bis 8, dadurch gekennzeichnet, dass zumindest einer der Zylinder (9/10) ein Bündel von zueinander und zur Rotationsachse des Zylinders parallelen Leitungen (9a/10a) umfasst, in welchen Leitungen (9a/10a) ein Wärmeaustauschfluid zum Heben oder Senken der Temperatur des Zylinders (9/10) und dementsprechend der Temperatur der Mischung der Reaktionspartner in flüssiger Phase zirkuliert.

10. Vorrichtung nach einem der Ansprüche 2 bis 9, dadurch gekennzeichnet, dass die gekrümmte, durch den vor dem Behälter auf der Seite des Förderers (1, 2, 6) befindlichen Zylinder (9/40) gebildete Wand und die Rückwand (10/42) des Behälters einen Raum (12/43) begrenzen, in den eine nachgiebige Folie (2) eingeleitet ist, die sich zum Teil um den Zylinder (9/40), auf dem sie sich im Behälter verschiebt, einrollt, wobei die Folie (2) dem Verlauf desselben folgt, indem sie vom Förderer (1, 2, 6) mitgenommen wird, und die horizontale Fläche (2) bildet, auf dem die Mischung der Reaktionspartner abgelegt ist.

11. Vorrichtung nach Anspruch 10, dadurch gekennzeichnet, dass die nachgiebige Folie (2) an den unteren Teil des Zylinders (40) unterhalb des Bodens des Behälters mittels einer der Wirkung von elastischen Mitteln unterworfenen Rolle (41) aufgedrückt ist.

12. Vorrichtung nach einem der Ansprüche 2 bis 10, dadurch gekennzeichnet, dass die nachgiebige Folie (2) an den unteren Teil des hinteren Zylinders (10) unterhalb der Tangentiallinie (12) der beiden Zylinder (9/10) mittels einer der Wirkung von elastischen Mitteln unterworfenen Rolle (3b) aufgedrückt ist, welche Folie danach zwischen den beiden Zylindern (9/10) durchbewegt wird und den vorderen Zylinder (9) von oben teilweise umgibt, um tangential zu demselben in einer im wesentlichen horizontalen Position zu verlaufen.

13. Vorrichtung nach einem der Ansprüche 2 bis 12, bei welcher die Mischung steigend in den Behälter (8) eingebracht wird, dadurch gekennzeichnet, dass sie mindestens einen jede der Wände (11/42b) durchquerenden Rohransatz (17) umfasst, welcher Rohransatz zum Positionieren im Giesskopf (4) schiebbar gelagert ist und zum Gewährleisten der Verteilung der Mischung in flüssigem Zustand im Giesskopf über seine Länge mit Öffnungen versehen ist.

14. Vorrichtung nach Anspruch 13, dadurch gekennzeichnet, dass sich der Rohransatz (17) aus mehreren in Verlängerung voneinander angeordneten, koaxialen Rohren (17a/17b/17c/17d) mit in bezug auf die Zirkulation der Mischung abnehmendem Querschnitt zusammensetzt, sodass zwischen ihnen ein ringförmiger Raum (17g/17h/17k) von im wesentlichen gleichen Querschnitt freibleibt, der annähernd dem Querschnitt des kleineren, mittleren Rohres (17d) entspricht.

15. Vorrichtung nach einem der Ansprüche 2 bis 14, bei welcher der U-förmige Förderer aus einem die nachgiebige Folie (2) tragenden Förderband (1a) gebildet ist, auf welchem sich der Schaum entwickelt und dessen Seitenwände (6) aus zwei nachgiebigen Folien bestehen, die jeweils von einer vor der Vorrichtung auf der Seite des Behälters (4) befindlichen vertikalen Rolle (7) kommen und sich über die Länge des Förderers (1) erstrecken und um eine andere vertikale, hinter der Vorrichtung befindliche Rolle einrollen, wobei sich die Folien (6) mit der Geschwindigkeit des Förderbandes (1a) weiterbewegen, da sie auf der Seite ihres unteren Randes entlang den Seitenrändern der vom Förderer getragenen Folie (2) verbunden sind, dadurch gekennzeichnet, dass sie weiters parallel zu und in der Nähe jeder Innenfläche der Seitenwände (6) des Förderers (1) eine weitere, geneigte nachgiebige Folie (46) umfasst, die von einer auf der Seite des Behälters (4) befindlichen Rolle (47) kommt, sich über zumindest den Teil der Vorrichtung erstreckt, in dem die in flüssiger Phase auf der horizontalen Folie (2) befindlichen Reaktionspartner in Reaktion treten und sich bis zur vollständigen Expansion des Schaums entwickeln, und sich in diesem Teil (46b) in geradliniger Richtung vom Eingang zum Ausgang der Vorrichtung und von unten nach oben verschiebt, wo sie von der über dem Förderer (1) befindlichen Rolle (48) mitgenommen wird, wobei ihre Neigung derart ist, dass ihre Seitenränder im wesentlichen parallel zur Steigung (49) der Mischung in Reaktionsphase sind, um Schaumbänder mit einer ebenen Oberfläche zu erhalten, die mit ihren Seitenflächen von Oberflächenfehlern freie, scharfe Kanten bilden.

16. Vorrichtung nach Anspruch 15, dadurch gekennzeichnet, dass sich die Teile (46a/46b) der Folie (46) über dem Förderer (1) und dem Giesskopf (4) befinden, und dass der Teil (46a) von oben nach unten geneigt und entlang eines geradlinigen, parallelen und an die horizontale Folie (2) anstossenden Organs umgebogen und von unten nach oben gemäss derselben Neigung wie jener des Teils (46a) zurückgeführt wird.

17. Vorrichtung nach einem der Ansprüche 2 bis 14 zur Herstellung von Tafeln aus starrem Schaum, mit einem unteren Förderer (50) als Träger einer nachgiebigen Folie (57), auf der sich die Mischung der Reaktionspartner befindet, und einem zweiten, über dem unteren Förderer (50) und parallel zu diesem angeordneten Träger (51), auf welchem eine nachgiebige Folie (52) am unteren Trum des oberen Förderbandes (51a) aufgebracht ist, welche Förderer (50/51) einem Raum d begrenzen, der die Dicke der Tafeln aus starrem Schaum festlegt, dadurch gekennzeichnet, dass der Behälter (54), in den die flüssigen Reaktionspartner eingebracht werden, in Längsrichtung der Vorrichtung verschiebbar ist und Mittel zum Fixieren in einer Position in bezug auf den Förderer (50) umfasst.

18. Vorrichtung nach Anspruch 17, dadurch gekennzeichnet, dass sich die zwischen dem Behälter (54) und dem unteren Förderer (50) befindliche Platte (59) aus mindestens zwei parallelen und aneinander anliegenden Platten (59a/59b) geringer Dicke zusammensetzt, welche Platten zum Einstellen der Länge der Platte (59) zwecks Verbindens des Behälters (54) mit dem Förderer (50) teleskopisch sind.

19. Vorrichtung nach einem der Ansprüche 2 bis 14 und 17 und 18, dadurch gekennzeichnet, dass sie in dem zwischen dem unteren Förderer (50) und dem oberen Förderer (51) bestehenden Raum zueinander parallele und in ein- und derselben Ebene angeordnete Stäbe (61) umfasst, welche Stäbe (61) vorkragend am Gerüst der Vorrichtung auf der Seite des Behälters (54) befestigt sind und sich derart zu den Förderern (50/51) erstrecken, dass sich ihr freies, zwischen den Förderern (50/51) befindliches Ende im wesentlichen an der Stelle befindet, wo die Erstarrung des Schaums stattfindet.

20. Vorrichtung nach Anspruch 19, dadurch gekennzeichnet, dass jeder der Stäbe (61) mit einer Hülle (63), die etwas grösser als der Stab ist, zum Verschieben entlang desselben unter der Wirkung des Schaums während seiner Expansion zwecks kontinuierlichen Herstellens und Abgrenzens von Kanälen (69) in den Schaumtafeln (68) umhüllt ist.

**Claims**

1. Method for manufacturing continuous strips of polymer foam obtained from a mixture of liquid reagents produced by a mixing head, which reagents generate an expanded foam, consisting in introducing said mixture of liquid reagents in continuous manner into a container, and in leaving said mixture to expand so that when fully expanded, the foam loaded up by a conveyor defining a passage of U cross-section, driven with a continuous movement, takes up the shape of a strip of rectangular cross section, characterized in that the volume of said container is so determined as to form a retention zone of the mixture of reagents in liquid phase in the state in which it emerges from the mixing head, and in that the level of this mixture kept to a level slightly higher than a horizontal plane on which the mixture flows in liquid state, so that the primary phase of the mixture expansion and the expansion thereof occur outside the container on a surface driven with a continuous movement under the effect of a conveyor, said surface is maintained in said horizontal plane.

2. Method for producing strips of polymer foam obtained from a mixture of liquid reagents generating an expanded foam and comprising a container (8/42), means (15/17) for introducing in continuous manner in said container said mixture of liquid reagents and a conveyor defining a passage of U cross section (1/2/6), driven with a continuous movement, and on which the foam is deposited to take up the shape of a strip of rectangular cross section, the container of which comprises a front wall (9/40), a rear wall (10/42) and two lateral walls (11/42b), which are contiguous to said front and rear walls, said front (9/40) and rear (10/42) wall also constitute the bottom of the container characterized in that the front wall, which is situated on the conveyor side (1/2/6) is a curved wall constituted by a cylinder (9/40) driven in rotation about a horizontal axis in the same direction and at the same speed as the conveyor, said cylinder (9/40) is tangent to a horizontal surface (2), on which flows the mixture of reagents in liquid phase, which surface (2) is driven with a continuous movement under the effect of a conveyor (1/2/6) and in that the assembly: rear wall (10/42), lateral walls (11/42b) comprises means for obtaining its pivoting movement about the axis of said cylinder (9/40) in order to raise or lower said assembly (10/42–11/42b) with respect to said horizontal surface (2) in order to modify the volume of the container and to immobilize said assembly in position after adjustment.

3. Method according to claim 2, of which the upper edge of the rear wall (10/42) and of the lateral walls (11/42b) of the container are situated on a higher level than that of the front wall (9/40), characterized in that said front wall (9/40) is tangential to a horizontal surface (2) on which flows the mixture of reagents in liquid phase, said horizontal surface (2) being driven with a continuous movement under the effect of the conveyor (1/2/6).

4. Method according to any one of claims 2 and 3, characterized in that the assembly: rear wall (10/42), lateral walls (11/42b) comprises means for causing its pivoting movement about the axis of said cylinder (9/40) in order to raise or lower said assembly (10/42/11/42b) with respect to said horizontal surface (2) in order to modify the volume of the container, and to immobilize in position said assembly after adjustment.

5. Method according to any one of claims 2 to 4, characterized in that the rear wall of the container (5) is a curved wall constituted by a cylinder (10) driven in rotation in the same direction as the front cylinder (9), said cylinders (9/10) are mounted on two parallel axes, substantially tangential, the tangential line (12) constituting the bottom of the container (8), and the lateral walls (11) being parallel and situated above the cylinders (9/10) and their lower edge is defined by two circular lines (11a/11b) converging into a point (11c) situated close to said tangential line (12), said lateral walls partly surrounding the cylinders (9/10) in order to allow on the one hand the rotation of the cylinders and on the other hand, the relative movement of the assembly: rear cylinder (10)/lateral walls (11), about the front cylinder (9) while ensuring tightness of the container (8).

6. Method according to claim 5, characterized in that the rear cylinder (10) has a greater diameter than the front cylinder (9) and is driven in rotation at a slower speed than said cylinder (9).

7. Method according to any one of claims 5 and 6, characterized in that the rear cylinder (10) is immersed in a solvent tank (38) and is subjected to the action of a scraper (39) extending in the longitudinal direction of the cylinder (10), to detach the polymerized particles adhering to its periphery.

8. Method according to any one of claims 2 to 7, characterized in that each of the lateral walls (11/42b) comprises a back plate (13/44) extending on the side of said horizontal surface (2), on which plate is deposited the mixture of reagents in liquid phase to achieve tightness at the junction between the lateral walls (11/42b) and said surface (2), said back plates (13/44) being adjustable in position on the walls (11/42b).

9. Method according to any one of claims 2 to 4, characterized in that at least one of said cylinders (9/10) comprises a bundle of pipes (9a/10a) which are parallel together and to the axis of rotation of the cylinders, in which pipes (9a/10a) a heat-conveying fluid caused to flow to raise or lower the temperature of the cylinder (9/10) and correlatively the temperature of the mixture of reagents in liquid phase.

10. Method according to any one of claims 2 to 9, characterized in that the curved wall, constituted by said cylinder (9/40), and situated at the front of the container on the conveyor side (1, 2, 6) and the rear wall (10/42) of the container, define a space (12/43) into which is inserted a supple sheet (2), which sheet is partly wound round said cylinder (9/40) on which it moves inside the container, said sheet (2) following on its path by being picked up by the conveyor (1, 2, 6) and constituting said horizontal surface (2) on which is deposited the mixture of reacting agents.

11. Method according to claim 10, characterized in that the supple sheet (2) is applied against the lower part of said cylinder (40) beneath the bottom of the container by means of a roller (41) subjected to the action of elastic means.

12. Method according to any one of claims 2 to 10, characterized in that the supple sheet (2) is applied against the lower part of the cylinder of the rear cylinder (10) beneath the tangential line (12) of the two cylinders (9/10) by means of a roller (3b) subjected to the action of elastic means, said sheet being thereafter inserted between the two cylinders (9/10) and partly surrounding the front cylinder (9) from above to extend tangentially thereto in a substantially horizontal position.

13. Method according to any one of claims 2 to 12, of which the mixture is bottom poured into the container (8), characterized in that it comprises at least a tube (17) traversing each of the walls (11/42b) said tube being slidably mounted so as to be positioned in the casting head (4) and being provided lengthwise with openings ensuring the distribution of the mixture in liquid state in the casting head.

14. Method according to claim 13, characterized in that the tube (17) is constituted by a plurality of coaxial tubes (17a/17b/17c/17d) situated in the extension one from the other and of decreasing section with respect to the mixture flow, in order to provide between said tubes annular spaces (17g/17h/17k) of substantially similar section, which approximately corresponds to the section of the smallest central tube (17d).

15. Method according to any one of claims 2 to 14, in which the U shaped conveyor is constituted by a belt (1a) carrying the supple sheet (2), on which the foam develops and whose lateral walls (6) are constituted by two supple sheets, each emerging from a vertical roller (7) situated at the front of the device on the container side (4), said sheets (6) extending lengthwise of the conveyor (1), and winding round another vertical roller situated at the rear of the device, said sheets (6) moving at the belt speed (1a) while being joined on their lower edge side along the lateral edges of said sheet (2) carried by the conveyor, characterized in that it further comprises in parallel and near each of the internal faces of the lateral walls (6) of the conveyor (1) another inclined supple sheet (46) emerging from a roller (47) situated on the container side (4), extends over at least part of the device on which the reagents deposited in liquid phase on said horizontal sheet (2) begin to react and develop until complete expansion of the foam, which sheet moves in this part (46b) following a rectilinear direction from inlet towards outlet of the device and upwardly to be thereafter picked up by the roller (48) situated above the conveyor (1), its inclination being such that its lateral edges are substantially parallel to the slope (49) of the mixture in reaction phase in order to produce foam strips having a plane upper face which forms with their lateral faces sharp edges free of surface defects.

16. Method according to claim 15, characterized in that the parts (46a/46b) of the sheet (46) are situated above the conveyor (1) and the casting head (4), and in that the part (46a) is inclined downwards and is bent along a parallel rectilinear member and contiguous to the horizontal sheet (2) and the part (46b) is returned upwardly according to the same inclination as that of the part (46a).

17. Method according to any one of claims 2 to 14, for the manufacture of rigid foam panels and comprising a lower conveyor (50) carrying a supple sheet (57) on which is deposited the mixture of reagents and a second conveyor (51) placed above said lower conveyor (50) and parallel thereto, and on which a supple sheet (52) is applied on the lower end of the upper belt (51a), said conveyors (50/51) define a space d which determines the thickness of the rigid foam panels, characterized in that the container (54) in which the liquid reagents are introduced can be moved in the longitudinal direction of the device and comprises means for being immobilized in position with respect to the conveyor (50).

18. Method according to claim 17, characterized in that the plate (59) which extends between the container (54) and the lower conveyor (50) is constituted by at least two thin plates (59a/59b) parallel and adjacent, said plates being telescopic to adjust the length of the plate (59) in order to connect the container (54) with the conveyor (50).

19. Method according to any one of claims 2 to 14, 17 and 18, characterized in that it comprises, in the space defined between the lower conveyor (50) and the upper conveyor (51), bars (61) which are parallel and placed in the same plane, said bars (61) being overhung and being fixed to the structure of the device on the container (54) side and extending towards the conveyor (50/51), so that their free end which is between said conveyors (50/51) is substantially situated on the spot where solidification of the foam occurs.

20. Method according to claim 19, characterized in that each of the bars (61) is surrounded by a sheath (63) slightly larger than the bar, in order to be moved along the latter under the effect of the expanding foam, in order to continuously produce and define channels (69) between the foam panels (68).

Fig. 1

Fig. 2

0 061 412

15

16

13c

14

13

8

11a

11d

2

F2

10

R1

17

13a

11b

F2

5

1a

X

11c

R2

12

x₁

9a

F

1b

39

10a

2

9

3b

1

3a

2

38

3

Fig. 3

Fig. 4

Fig. 5

0 061 412

Fig. 6

Fig. 7

Fig. 8

Fig. 9

Fig. 10

0 061 412

# Fig. 11

# Fig. 12

0 061 412

Fig. 13

Fig. 14

Fig. 15